# EUROPÄISCHE PATENTANMELDUNG

(11) **EP 1 754 952 A2**
(43) Veröffentlichungstag der Anmeldung: **21.02.2007**
(21) Anmeldenummer: 06012111.8
(22) Anmeldetag: 20.10.2003
(51) Int. Cl.: G01B 11/24, G01B 11/25, A61C 13/00

(54) **Vorrichtungen und Verfahren zur oberflächenerfassung und zur herstellung von Zahnersatzteilen**

(30) Priorität: 18.10.2002 DE 20216119 U
(62) Teilanmeldung aus: 03776796.9
(71) Anmelder: Willytec GmbH, 82166 Gräfelfing (DE)
(72) Erfinder: Holzner, Stephan, Dipl.-Ing., 82166 Gräfelfing (DE); Weber, Gerhard, Dipl.-Ing., 82166 Gräfelfing (DE)
(74) Vertreter: Lindner, Manfred Klaus

(57) **Zusammenfassung**

Die vorliegende Erfindung betrifft Oberflächenerfassungs- und/oder Erzeugungseinrichtungen, mit Einrichtungen Einrichtungen zur Herstellung von komplexen Zahnersatzkonstruktionen. ferner betrifft die Erfindung Oberflächenerfassungs- und/oder Erzeugungsverfahren mit Verfahrensschritten zur Herstellung von komplexen Zahnersatzkonstruktionen.

## Beschreibung

Die vorliegende Erfindung betrifft Einrichtungen und Verfahren zur Herstellung von Zahnersatzteilen, insbesondere unter Verwendung von Oberflächenerfassungs- und -erzeugungseinrichtungen sowie Verfahren zur Oberflächenerfassung und -erzeugung zur Erfassung und/oder Erzeugung von Oberflächen von Zähnen.

Grundlegenden Technologien, die zusammen mit der vorliegenden Erfindung nutzbar sind oder mit denen sie kombinierbar ist, sind in den Offenlegungsschriften DE 44 39 307 A1 und DE 197 21 688 A1 sowie WO 02/39056 A1 offenbart, die einerseits für Oberflächenerfassungs- und -erzeugungseinrichtungen sowie Verfahren zur Oberflächenerfassung und -erzeugung als nächstliegender Stand der Technik herangezogen werden und andererseits hiermit durch Bezugnahme vollumfänglich in die vorliegenden Unterlagen aufgenommen sind, da die vorliegende Erfindung in allen ihren Ausgestaltungen mit dieser Technologie nutzbar und kombinierbar ist, und sie insofern vorteilhaft weiterbildet und/oder verbessert, worin auch Ziele der vorliegenden Erfindung in einigen ihrer Aspekten liegt.

Die WO 02/39056 A1 offenbart eine ganze Reihe nützlicher und/oder wesentlicher Informationen, die für das Verständnis und die Gestaltung der vorliegenden Erfindung von Nutzen oder zumindest von Vorteil sind, so dass die WO 02/39056 A1 nachfolgend weitgehend zitiert wird.

In der ursprünglichen Version der WO 02/39056 A1 erreicht deren technische Lehre das Ziel, eine Oberflächenerfassungs- und Erzeugungseinrichtung mit Einrichtungen zur Ablaufsund/oder Aufwandsoptimierung zu schaffen.

Gemäß der WO 02/39056 A1 ist vorzugsweise vorgesehen, dass die Einrichtungen zur Ablaufs- und/oder Aufwandsoptimierung Rohmaterial-Rückgewinnungseinrichtungen enthalten, und/oder dass die Einrichtungen zur Ablaufs- und/oder Aufwandsoptimierung eine automatisierte Steuerung der Intensität eines verwendeten Laserlichtes enthalten. Alternativ oder zusätzlich ist es bevorzugt, wenn die Einrichtungen zur Ablaufs- und/oder Aufwandsoptimierung derart ausgelegt sind, dass zwei Halbbilder, die verschiedene Positionen oder Ansichten zeigen, ausgewertet werden, wobei insbesondere ein gepulster Laser zur Belichtung enthalten ist.

Weitere alternative oder zusätzliche Ausgestaltungen einer Oberflächenerfassungseinrichtung gemäß der WO 02/39056 A1 insbesondere zur Gewinnung von Oberflächendaten von Zähnen bestehen darin, dass die Einrichtungen zur Ablaufs- und/oder Aufwandsoptimierung Einrichtungen zum Ausführen einer Eichprozedur unter Auswertung von Überlagerungsfehlern an Matching-Stellen enthalten, und/oder dass eine Bildaufzeichnungseinrichtung, insbesondere ein CCD-Chip, so angeordnet ist, dass Zeilen unter Berücksichtigung des Scheimpflugwinkels senkrecht zur Verfahrrichtung des Messtisches liegen.

Eine weitere Variante einer Oberflächenerfassungseinrichtung insbesondere zur Gewinnung von Oberflächendaten von Zähnen nach der WO 02/39056 A1 besteht darin, dass die Einrichtungen zur Ablaufs- und/oder Aufwandsoptimierung Einrichtungen zum Archivieren insbesondere von dreidimensionalen Kieferdaten und/oder zum Nachempfinden der Bißstellung von Ober- und Unterkiefern enthalten.

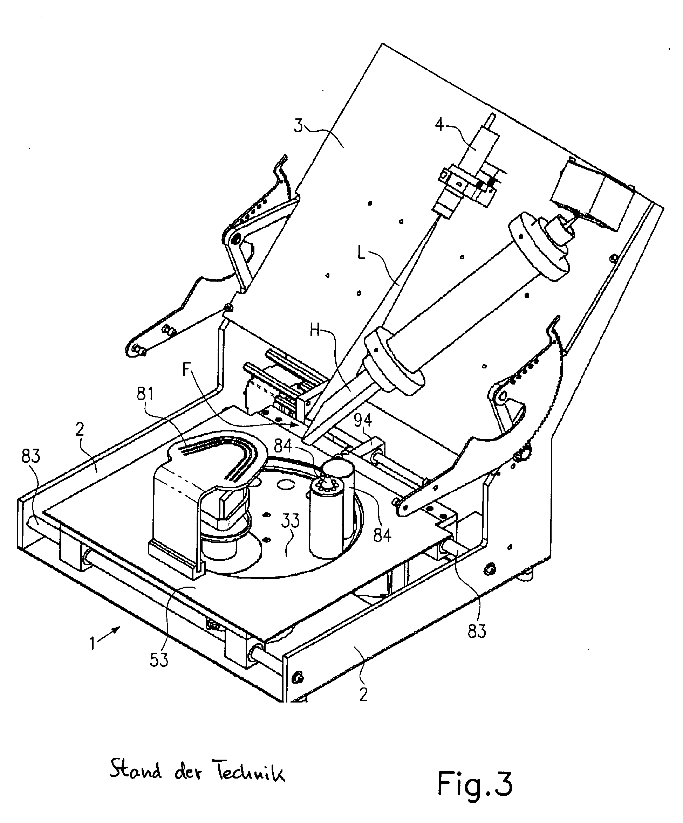

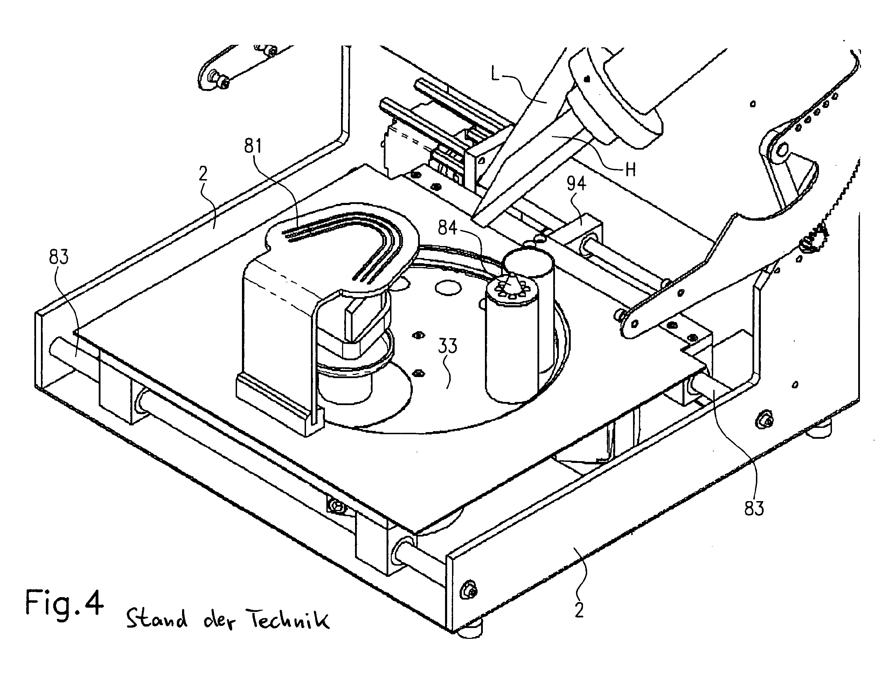

Spezielle vorzugsweise insbesondere mechanische Ausgestaltungen der Oberflächenerfassungseinrichtung richten sich nach dem Offenbarungsgehalt der Figuren 3 und 4 und/oder 5, 6 und 7 sowie der diesbezüglichen Beschreibung.

Bevorzugt ist es ferner, wenn bei der Oberflächenerfassungs- und Erzeugungseinrichtung insbesondere zur Herstellung von Zahnersatz die Einrichtungen zur Ablaufs- und/oder Aufwandsoptimierung Einrichtungen zur optimierten Vorbereitung wenigstens eines Zahnstumpfes zur Herstellung und zum Aufsetzen einer Zahnprothese darauf und/oder Einrichtungen zur Berücksichtigung der Bißstellung von Ober- und Unterkiefer enthalten.

Die Oberflächenerfassungs- und/oder Erzeugungsverfahren gemäß der WO 02/39056 A1 sind dadurch gekennzeichnet, dass sie eine oder mehrere der vorstehend erläuterten Einrichtungen verwenden bzw. entsprechend analog funktionieren.

Schließlich wird durch die WO 02/39056 A1 noch ein Patientendatenarchivierungssystem geschaffen, das durch eine Chipkarte und/oder dezentrale Datenspeicher insbesondere für Zahndaten gekennzeichnet ist.

Einzelne Aspekte der WO 02/39056 A1 werden nachfolgend noch näher erläutert.

Gemäß einem Aspekt der WO 02/39056 A1 ist ausgehend von Oberflächenerfassungstechnologien, -einrichtungen und -verfahren, wie sie in den vorstehend angegebenen und hierin durch Bezugnahme aufgenommenen Veröffentlichungen angegeben sind und die nachfolgend vereinfachend als "Scanner" bzw. "Scannen" bezeichnet werden, in Kombination mit beispielsweise einer Fräsmaschine eine Rohmaterial-Rückgewinnung vorgesehen. Der Scanner bildet zusammen mit der Fräsmaschine und geeigneter EDV eine CAD-CAM-Anlage insbesondere zur Herstellung von Gold- oder Platinzahnersatz. Die Rohstoff-Rückgewinnung kann bevorzugt dadurch realisiert werden, dass die beispielsweise verwendete Fräsmaschine mit Einrichtungen z.B. zum Absaugen von Gold- oder Platinstaub-/-spänen ausgerüstet ist. In Anbetracht der hohen Kosten für die Rohmaterialien Gold oder Platin wird dadurch vorteilhaft eine wesentliche Senkung der Kosten für die Herstellung von Gold- oder Platinzahnersatz erreicht.

Gemäß einem weiteren Aspekt der WO 02/39056 A1 wird die in den eingangs angegebenen Veröffentlichungen offenbarte Scannertechnologie weiter verbessert.

Zum einen wird dies gemäß der WO 02/39056 A1 durch eine automatische Regelung der Intensität des verwendeten Laserlichts erreicht. Dabei wird vorzugsweise die Reflektivität der zu vermessenden beispielsweise über die Intensität des z.B. von einem CCD-Chip aufgenommenen Lichtes ermittelt. Basierend auf dem Ermittlungsergebnis wird dann die Intensität des Laserlichts nachgeregelt. Die Verbesserung dieser Ausgestaltung besteht darin, dass dadurch Messfehler aufgrund von Unter- oder Übersteuerungen des Messsignals vermindert werden. Die WO 02/39056 A1 betrifft sowohl Einrichtungen, als auch Verfahren gemäß der vorstehenden Erläuterung.

Die Scannertechnologie wird im Rahmen der WO 02/39056 A1 zum anderen durch eine Geschwindigkeitssteigerung verbessert, indem anstatt eines Vollbildes von der Kamera/dem CCD-Chip, bestehend aus zwei zusammengesetzten Halbbildern, zwei solche Halbbilder ausgewertet werden, die unterschiedliche Ansichten zeigen. Die unterschiedlichen Ansichten entstehen durch verschiedene Relativpositionen der zu erfassenden Oberfläche eines Zahnes und der Vorrichtung zum Aufnehmen dieser Oberfläche (z.B. eine Kamera mit einem oder alleine ein CCD-Chip).

Insbesondere die vorstehende Verbesserung, aber allgemein die verwendete Abtasttechnologie kann dadurch vorteilhaft weitergebildet werden, dass ähnlich einem Stroboskopeffekt der verwendete Laser gepulst angesteuert und beispielsweise der Tisch, der das Objekt trägt, dessen Oberfläche erfaßt werden soll, wie z.B. einen Zahn oder ein Modell davon, insbesondere kontinuierlich verfahren wird. Durch den gepulsten Laserstrahl werden von jeder Relativposition von Objekt und Kamera Momentaufnahmen oder "Standaufnahmen" erstellt, da das Objekt während der kurzen Belichtungszeit mit einem Laserstrahlpuls scheinbar steht und in dieser Position von der Kamera aufgenommen werden kann. Besonders bevorzugt ist jeder einzelne Laserimpuls mit der Aufnahme eines Halbbildes gekoppelt.

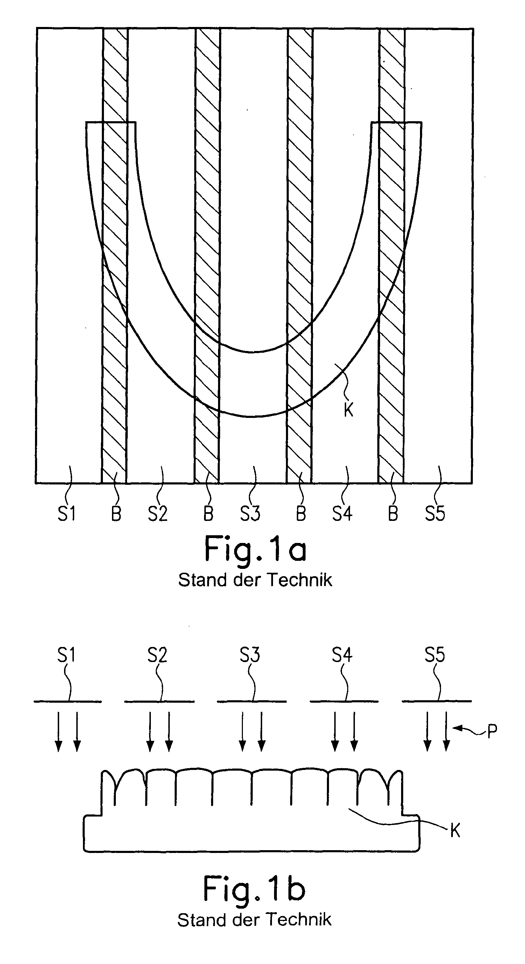

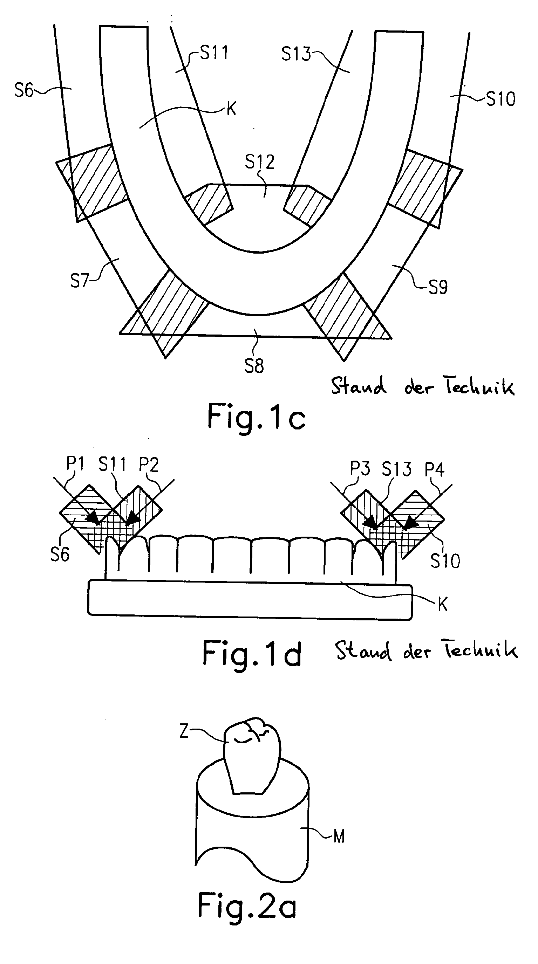

Noch eine weitere Verbesserung der Scannertechnologie gemäß der WO 02/39056 A1 besteht in einer Eichprozedur, die verschiedene räumliche Verzerrungen der ermittelten Messgrößen korrigiert. Dabei wird ein Körper aus verschiedenen Ansichten vermessen. Die Messungen werden per Matching-Algorithmus zusammengelegt. Die an verschiedenen Stellen des Objekts bei diesem Zusammenlegen auftretenden Überlagerungsfehler werden dahingehend analysiert, dass Abweichungen in allen Raumrichtungen erkannt werden. Aus diesen Abweichungen resultieren Eichfehler, aus denen wiederum Eichparameter in allen Raumrichtungen und Raumdrehungen errechnet werden. Diese Eichparameter können dann bei weiteren Messungen von der EDV automatisch berücksichtigt werden, wodurch in vorteilhafter Weise eine gesteigerte Messgenauigkeit erreicht wird. Weitere Einzelheiten hierzu ergeben sich aus dem in der Fig. 1 dargestellten Ausführungsbeispiel.

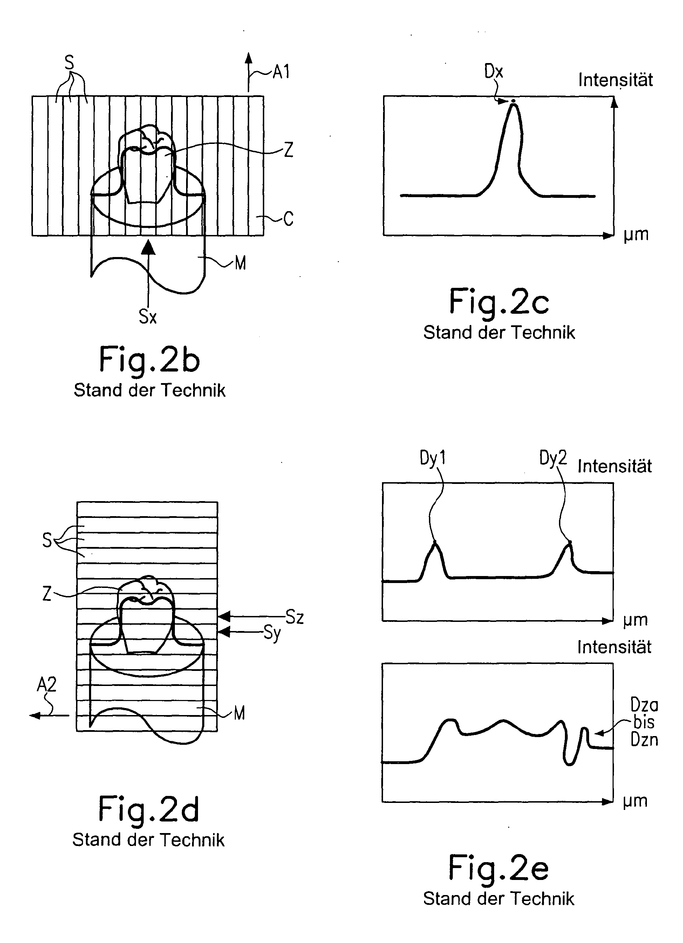

Des weiteren wird die Scannertechnologie gemäß dem noch älteren Stand der Technik durch die WO 02/39056 A1 dadurch verbessert, das ein CCD-Chip (oder allgemein eine Oberflächenbilderfassungsvorrichtung) so angeordnet wird, dass beispielsweise Kamerazeilen unter Berücksichtigung des Scheimpflugwinkels senkrecht zu z.B. der Verfahrrichtung des Messtisches liegen, auf dem das zu erfassende Objekt installiert ist. Weitere Einzelheiten hierzu sind in dem Ausführungsbeispiel gemäß der Figur 2 dargestellt. Dadurch wird eine bessere Ausnutzung des Messfeldes für die Vermessung beispielsweise von Zähnen erreicht, wobei zu beachten ist, dass marktübliche Chips nicht quadratisch sind.

Die bekannte Scannertechnologie läßt sich außerdem noch dadurch verbessern, dass entsprechend der WO 02/39056 A1 Verfahr- und Schwenkachsen von Objektträger, Objekt und/oder Kamera so vorgesehen und angeordnet werden, dass eine Einsicht in alle im Kiefer vorkommenden Hinterschneidungen, wenn die Lehre der WO 02/39056 A1 z.B. im Bereich von Zahnoberflächenerfassung zum Einsatz kommt, ermöglicht ist. Dies hat den Vorteil, dass eine vollautomatische Vermessung/Mess-Strategie zum Einsatz kommen kann.

Gemäß einem weiteren Aspekt der WO 02/39056 A1 werden mit Vorteil diverse EDV-Module beispielsweise in verschiedenen Feldern der Zahnmedizin eingesetzt.

So schafft die WO 02/39056 A1 eine Scannertechnologie, die mit einer EDV, vorzugsweise in Form eines Standart-Computers mit Spezialsoftware als Steuereinrichtung, ausgestattet ist, die zur Archivierung z.B. von dreidimensionalen Kieferdaten, insbesondere Oberflächendaten, geeignet ist. Die Archivierung dient dem Ersatz bisheriger Archivierungsformen von solchen Daten in Form von Gipsmodellen. In vielen Bereichen der Zahnmedizin war es bisher erforderlich, Gipsmodelle von Patienten bis zu 10 Jahre lang aufzubewahren, was einen enormen Platzbedarf zur Folge hat. Die elektronische Archivierung dieser Daten schafft jedoch nicht nur hinsichtlich des Platzbedarfes Abhilfe, sondern ermöglicht auch eine schnellere, einfachere und kostengünstigere Nutzung der archivierten Daten. So ist es beispielsweise möglich, 3D-Messdaten von ehemals gesunden Zahnoberflächen zu erfassen und zu archivieren. Dies ermöglicht nach Jahren, z.B. wenn ein Zahn ersetzt werden muß, eine Rekonstruktion des Zahns in Form eines Zahnersatzes, der beispielsweise anhand der archivierten Daten durch frästechnische Erzeugung seiner Oberflächen hergestellt werden kann.

Eine elektronische Archivierung von Kiefer-/Gebißdaten kann aber noch in vielerlei anderen Hinsichten vorteilhaft genutzt werden. So ermöglichen diese Daten mittels einer geeigneten EDV eine Nachempfindung der Bißstellung von Ober- und Unterkiefern. Insbesondere kann dies erzeugt werden, indem zunächst der Unterkiefer vermessen wird, dann ein Bißregistrat (Abdruck im Patientenmund, während er zubeißt) auf den Unterkiefer gelegt wird und nochmals vermessen wird. Damit sind beide Zahnoberflächen in der Bißsituation ermittelt. Beide Datensätze können getrennt oder zusammen visualisiert werden und alle damit verbundenen zahnärztlichen Analysen z.B. qualitativ oder quantitativ (in Form von Abstands- oder Volumenmessungen) durchgeführt werden. Zur Ergänzung kann auch der komplette Oberkiefer vermessen und mittels des Bissregistrats und beispielsweise einer Matching-Software räumlich referenziert werden. Ebenso können Kaubewegungen mittels Aufnahme der Kieferbewegung und Bißregistrat am Computer simuliert werden. Die Referenzierung der Messdaten von Ober- und Unterkiefer kann auch zur Modulation von Zahnersatz im Zusammenhang mit der CAD-CAM-Technologie verwendet werden.

Eine weitere Variante der WO 02/39056 A1 besteht in einer Scannertechnologie, die mit einer EDV ausgestattet ist, wie z.B. einem Standart-Computer mit einer entsprechenden Software als Steuereinrichtung, um die Bißstellung von Ober- und Unterkiefern auch mit besonderer Ausrichtung für eine kieferorthopädische Behandlung nachempfinden zu können. Eine Behandlungsplanung für z.B. eine Zahnspange kann dadurch simuliert werden, dass beispielsweise in der Software das Gebiß in Zahngruppen bis hin zu Einzelzähnen aufgegliedert wird. Solche Gruppen/Einzelzähne können bewegt und die Endstellungen simuliert werden. Dies ermöglicht Antworten auf Fragen, ob benötigter Platz auf dem Kieferkamm vorhanden ist und wie der Biß nach der Behandlung aussehen wird. Durch weitere EDV-/Software-Einrichtungen, die modular zusammengefügt werden können, ist eine Behandlungskontrolle möglich. Nach Zeitabschnitten kann ein Kiefer immer wieder gescannt werden. Die zeitlich aufeinander folgenden Aufnahmen können dann als interpolierter "Film" abgespielt werden. Dies ermöglicht einen Vergleich des Verlaufs der tatsächlichen Behandlung mit der geplanten Behandlung und die Festlegung/Durchführung von Korrekturen. Solche Aufnahmereihen können ferner archiviert werden und beispielsweise bei Prozessen eine Beweisführung erleichtern. Auch wird die Kommunikation mit Gutachtern und Kassen erleichtert und beschleunigt.

Ein weiterer Gesichtspunkt der WO 02/39056 A1 besteht in einer Scannertechnologie, die mit einer EDV/elektronischen Steuerung (beispielsweise durch Software) ausgestattet ist, um z.B. die Bißstellung von Ober- und Unterkiefern auch mit besonderer Ausrichtung für die kieferchirurgische Behandlung nachempfinden zu können. Im Rahmen dieses Aspektes der WO 02/39056 A1 ist insbesondere die Eingliederung von Messdaten der Kieferknochen (ermittelt z.B. mit einem Computertomographen) mittels einer geeigneten Matching-Software vorgesehen. Die Behandlungsplanung (z.B. eine Operation des Kiefers) wird dadurch simuliert, dass in beispielsweise einer Software das Gebiß, der Kiefer und der Kieferknochen in Zahn-/Kieferabschnittsgruppen (bis hin zu Einzelzähnen) aufgegliedert wird. Die Gruppen/Einzelzähne können bewegt und die Endstellungen simuliert werden. Dies ermöglicht eine Beantwortung von Fragen, ob ein benötigter Platz vorhanden ist und wie der Patient nach der Behandlung aussehen wird. Ein weiteres EDV-/Software-Modul kann in diesem Fall für eine Behandlungskontrolle eingesetzt werden. Nach Ablauf von Zeitabschnitten wird jeweils der aktuelle Zustand gescannt. Die Aufnahmen über die Zeit können als interpolierter "Film" abgespielt werden. Der Verlauf der tatsächlichen Behandlung kann mit der geplanten Behandlung verglichen werden und es können eventuell erforderliche Korrekturen daraus abgeleitet werden. In vorteilhafter Weise ermöglicht dieser Aspekt der WO 02/39056 A1 die Planung und Simulation von Implantaten. Auch archivierte Aufnahmereihen zur Beweiserleichterung bei eventuellen Prozessen und leichtere und schnellere Kommunikation mit Gutachtern und Kassen liegen als weitere Vorteile vor.

Im Rahmen der WO 02/39056 A1 liegt schließlich noch ein Patientendatenträger, wie beispielsweise eine Chipkarte, der sämtliche personenbezogenen Gesundheits- und Krankheitsdaten enthält. Ein solcher individueller Datenträger kann in ein Verwaltungs- und Archivierungssystem integriert sein, das insbesondere dezentrale Speichereinrichtungen zum Archivieren von großen Datenmengen enthält, auf die mittels Zugangseinrichtungen auf dem Datenträger zugegriffen werden kann. So lassen sich beispielsweise auch zahnmedizinische Patientenstammdaten, die 3D-Kiefer- und -Einzelzahndaten von Zahnoberflächen und innere Aufbauten von individuellen Zähnen sowie Erzeugungsdaten von eingesetztem Zahnersatz (Material- und z.B. Fräsdaten) enthalten können, archivieren und leicht verfügbar machen. Daneben werden ferner Krankenversicherungsdaten, digitale Röntgenaufnahmen, ehemals und aktuell behandelnde Ärzte und allgemein die gesamte Krankengeschichte eines Patienten gespeichert. Im Rahmen der technischen Lehre der WO 02/39056 A1 können ferner spezielle Lese- und Auswertegeräte vorgesehen und u. U. in dem System integriert sein. Damit werden als Vorteile beispielsweise eine doppelte Archivierung beim Patienten, bessere Rückverfolgungsmöglichkeiten für Krankenkassen und Datenverfügbarkeit auch bei Wohnortwechsel erreicht.

Ferner ist Gegenstand der WO 02/39056 A1 eine weitere Variante/Ausgestaltung zur Realisierung einer gepulsten Messung, wie bereits weiter oben grundsätzlich dargestellt.

Eine entsprechende Oberflächenerfassungsein- oder -vorrichtung besteht beispielsweise aus einem Lineartisch, einer CCD-Kamera, einer Framegrabberkarte und einem Laserlinienmodul. Zur Datenerfassung wird die Laserlinie permanent auf das Messobjekt projiziert. Der Messtisch bewegt das Objekt schrittweise unter der Messanordnung (Laserlinie und CCD-Chip) hindurch. Nach jedem Schritt erfolgt eine Messung.

Dabei ist der frühere genaue Ablauf folgendermaßen: Der Messtisch fährt in eine Startposition und stoppt. Das Objekt muß ruhen, damit kein "Verwackeln" der Aufnahme zu Messungenauigkeiten führt. Dann ließt die CCD-Kamera eine Zeile aus (Vollbild) und übergibt das Signal an die Framegrabberkarte. Anschließend wird der Tisch beschleunigt (Anfahrrampe). Danach wird der Tisch wieder abgebremst und in einer vorgegebenen Position gestoppt (Bremsrampe). Die CCD-Kamera ließt dann die nächste Zeile aus. Dieser Gesamtvorgang läuft unter Verdunkelung ab. Die Laserdiode kann nur auf eine gewisse Leistung hochgeregelt werden, damit das Signal nicht übersteuert.

Gemäß der WO 02/39056 A1 war es seinerzeit eine Neuerung, dass die Laserlinie stroboskopartig auf das Messobjekt projiziert wird, d.h., dass regelmäßig Lichtblitze in Form einer Laserlinie auf das Objekt geworfen werden. Der Messtisch bewegt das Objekt kontinuierlich unter der Messanordnung (Laserlinie, CCD-Chip) hindurch. Gleichzeitig mit jedem Lichtblitz erfolgt eine Messung. Insbesondere fährt der Messtisch mit kontrollierter/überwachter Geschwindigkeit, die mit der Blitzsteuerung abgestimmt ist. In vorzugsweise regelmäßigen Abständen (Zeit oder Verfahrweg des Tisches) wird ein Blitz ausgesandt und gleichzeitig ein Halbbild des CCD-Chips ausgelesen. Dieses Signal wird an die Framegrabberkarte übergeben und mittels spezieller Software ausgewertet. Die Blitzzeit ist so kurz, dass ein "Verwackeln", das durch die kontinuierliche Tischbewegung entstehen könnte, vernachlässigbar ist.

Mit der Ausgestaltung aus der WO 02/39056 A1 wird das Messverfahren um einen Faktor 5 beschleunigt, da die Anfahr- und Bremszeiten des Tisches entfallen und die Lichtblitze derart schnell getaktet werden können, dass mit Halbbildern ausgelesen werden kann. Als weiterer Vorteil ergibt sich, dass die Steuerung kostengünstiger gestaltet werden kann, da nur ein gleichmäßiger Vorschub gewährleistet und keine genaue Ruheposition eingestellt werden muß. Vorteilhaft ist ferner, dass die bisherigen opto-mechanischen Anordnungen weiter eingesetzt/verwendet werden können, da die vorliegende Neuerung im Hinblick auf Steuerung, Regelung und Software für die Komponenten realisiert werden kann bzw. besteht. Weiterhin ist von Vorteil, dass der verwendete Blitz wesentlich intensiver als das früher verwendete Lasersignal ist, wodurch die Messung auch bei Tageslicht erfolgen kann und der Messraum nicht abgedunkelt werden muß, was die Arbeit und deren Aufwand und Zeitbedarf insbesondere beim Auswechseln von Messobjekten wesentlich verringert.

Neben den bereits oben und vorstehend beschriebenen technischen Spezifikationen zum Thema "Stroboskoplaser" etc. liegen im Rahmen der WO 02/39056 A1 ferner mechanische Ausführungen, die in ihrem Konzept sowie konkreten Ausgestaltungen und auch Betriebsverfahren in Kombination und auch jeweils für sich alleine als schützenswert und schutzfähig angesehen werden.

Insbesondere gegenüber dem technischen Stand der Vorrichtung zur Herstellung eines Zahnersatzes gemäß der EP 98115809.0 beinhaltet die WO 02/39056 A1 eine Reihe von Konzepten und Ausgestaltungen, die ein entsprechendes Gerät in der Herstellung drastisch verbilligen und funktionssicherer machen. Weiterhin stellen diese Aspekte der WO 02/39056 A1 vorteilhafte und bevorzugte Weiterbildungen und Kombinationen der in der DE 44 39 307 A1 und DE 197 21 688 A1 offenbarten Technologie dar, deren vollständiger Inhalt ebenso wie der der Offenlegungsschrift zur EP 98115809.0 insoweit zur Vermeidung bloßer identischer Wiederholung in den vorliegenden Unterlagen in letzteren hiermit durch Bezugnahme vollumfänglich aufgenommen ist. Die einzelnen Merkmale und Merkmalskombinationen sind insbesondere, jedoch nicht zwingend oder ausschließlich, mit der weiter oben erläuterten Stroboskoptechnik zu kombinieren.

Beispielsweise basierend auf und/oder in Kombination mit den vorstehenden Darlegungen aus der PCT/DE 01/04177 (Internationale Veröffentlichungsnummer WO 02/39056 A1), jedoch nicht auf eine solche Basis oder Kombination beschränkt hat die vorliegende Erfindung weitere Verbesserungen bei Einrichtungen und Verfahren zur Herstellung von Zahnersatzteilen zum Ziel.

Zur Erreichung dieses Ziels werden durch die vorliegende Erfindung Einrichtungen und Verfahren zur Herstellung von komplexen Zahnersatzkonstruktionen geschaffen.

Die Vorteile dieser erfindungsgemäßen Einrichtungen und Verfahren liegen insbesondere bei Ablaufs- und/oder Aufwandsoptimierung.

Insbesondere und in erster Linie, jedoch nicht beschränkend, werden mit den einzelnen Aspekten der vorliegenden Erfindung technische Verbesserungen gegenüber der technischen Lehre in der EP 98115809.0 sowie der WO 02/39056 A1 geschaffen. Es wird aber nochmals betont, dass die erfindungsgemäßen Einrichtungen und Verfahren zur Herstellung von Zahnersatzteilen insbesondere auch ohne die Basis und/oder Kombination mit der Technologie des genannten Standes der Technik zu realisieren und daher schutzwürdig sind.

Weitergebildete Einrichtungen und Verfahren zur Herstellung von Zahnersatzteilen gemäß der Erfindung sind in den unabhängigen Ansprüchen angegeben. Weitere bevorzugte und vorteilhafte Ausgestaltungen der Erfindung ergeben sich aus den einzelnen Ansprüchen und deren Kombinationen.

Insbesondere schafft die vorliegende Erfindung Oberflächenerfassungs- und/oder Erzeugungseinrichtungen,
mit Einrichtungen zur Erfassung von 3D-Daten wenigstens eines Zahnersatzbasisobjektes, wie eines Zahnstumpfes oder Implantatpfostens, und einer Umgebung davon, sowie
mit Einrichtungen zur datenmäßigen Erzeugung und Herstellung eines Zahnersatzteils unter Einbeziehung der 3D-Daten des Zahnersatzbasisobjektes,
wobei ferner vorgesehen sind:
Einrichtungen zur Ermittlung und/oder Festlegung einer Einschubrichtung des Zahnersatzteils, das auf das Zahnersatzbasisobjekt aufzuschieben ist, sowie
Einrichtungen zur Ermittlung und Herstellung eines Primärteils, das vor dem Zahnersatzteil auf das Zahnersatzbasisobjekt aufzuschieben ist und das für das Zahnersatzteil eine gewünschte Einschubrichtung ergibt, die von der Einschubrichtung verschieden ist, die für das Aufschieben des Primärteils auf das Zahnersatzbasisobjekt gegeben ist, und
dass die Einrichtungen zur datenmäßigen Erzeugung und Herstellung eines Zahnersatzteils ausgelegt sind, letzteres unter Einbeziehung der 3D-Daten des Primärteils zu erzeugen und herzustellen.

Bevorzugte Weiterbildungen davon sind derart, dass ferner Kombinationseinrichtungen vorgesehen sind, die zum Zusammenführen von 3D-Daten von wenigstens 2 Zahnersatzbasisobjekten in Form, Lage und Stellung zueinander ausgelegt sind, und dass die Einrichtungen zur Herstellung eines Zahnersatzteils ausgelegt sind, ein gemeinsames Zahnersatzteil für alle beteiligten Zahnersatzbasisobjekte herzustellen.

Weiterhin ist es bevorzugt, wenn zur Erfassung von Form, Lage und/oder Stellung jedes Zahnersatzbasisobjektes und/oder jedes Primärteils berührungslos arbeitende Erfassungseinrichtungen enthalten sind.

Bei noch einer weiteren vorteilhaften Ausgestaltung der vorliegenden Erfindung ist vorgesehen, dass für die Ermittlung und/oder Festlegung und/oder Erzeugung und/oder Zusammenführung von Messdaten, 3D-Daten und -Datensätzen, Archiv- und/oder Vorgabedaten und/oder -datensätzen sowie Einschubrichtungen elektronische Verarbeitungseinrichtungen vorgesehen sind, denen Prozessoreinrichtungen, Speichereinrichtungen, Schnittstellen und Steuereinrichtungen zugeordnet sind oder in denen Prozessoreinrichtungen, Speichereinrichtungen, Schnittstellen und Steuereinrichtungen enthalten sind. Alternativ oder zusätzlich kann mit Vorzug vorgesehen sein, dass Einrichtungen gemäß der WO 02/39056 A1 enthalten sind, und/oder dass CAD/CAM-Einrichtungen enthalten sind.

Im Umfang der vorliegenden Erfindung kann ferner vorgesehen sein, dass Datenfernübertragungseinrichtungen enthalten sind, so dass die Erfassungseinrichtungen und jedenfalls die Erzeugungseinrichtungen und/oder die Herstellungseinrichtungen lokal getrennt voneinander aufstellbar sind, wobei vorzugsweise eine Mehrzahl von lokal getrennt voneinander aufgestellte Erfassungseinrichtungen mit einer zentralen Erzeugungseinrichtung gekoppelt ist.

Durch die Erfindung werden ferner geschaffen Oberflächenerfassungs- und/oder Erzeugungsverfahren, wobei von einem Zahnersatzbasisobjekt, wie einem Zahnstumpf oder Implantatpfosten, und einer Umgebung davon 3D-Daten erfasst werden und dann auf der Basis dieser 3D-Daten des Zahnersatzbasisobjektes ein darauf aufzuschiebendes Zahnersatzteil hergestellt wird, wobei vor der Herstellung des Zahnersatzteils eine Einschubrichtung des Zahnersatzteils auf das Zahnersatzbasisobjekt ermittelt und/oder festgelegt wird, auf der Basis dieser 3D-Daten des Zahnersatzbasisobjektes ein Primärteil ermittelt und hergestellt wird, mit dem für das Zahnersatzteil eine gewünschte Einschubrichtung geschaffen wird, die von der Einschubrichtung verschieden ist, die für das Aufschieben des Primärteils auf das Zahnersatzbasisobjekt gegeben ist, und das Zahnersatzteil passend zum Aufschieben auf das Primärteil auf der Basis dessen 3D-Daten datenmäßig erzeugt und hergestellt wird.

Bevorzugt kann dabei ferner vorgesehen sein, dass 3D-Daten von wenigstens 2 Zahnersatzbasisobjekten in Form, Lage und Stellung zueinander erfaßt werden, und dass ein gemeinsames Zahnersatzteil für alle beteiligten Zahnersatzbasisobjekte datenmäßig erzeugt und hergestellt wird, wobei vorzugsweise 3D-Daten von wenigstens 2 Zahnersatzbasisobjekten in Form, Lage und Stellung zueinander einzeln erfaßt und dann zusammengeführt werden.

Weiterhin kann bei dem Oberflächenerfassungs- und/oder Erzeugungsverfahren nach der Erfindung vorgesehen sein, dass die Erfassung von Form, Lage und/oder Stellung jedes Zahnersatzbasisobjektes und/oder jedes Primärteils berührungslos erfolgt, und/oder dass Einrichtungen gemäß der WO 02/39056 A1 eingesetzt werden.

Bei weiteren vorzugsweisen Ausgestaltungen kann vorgesehen sein, dass Messdaten, 3D-Daten und -Datensätze, Archiv- und/oder Vorgabedaten und/oder -datensätze sowie Einschubrichtungen insbesondere aus Messeinrichtungen und/oder Speichereinrichtungen verwendet werden, wobei vorzugsweise Daten von vorkonfektionierten Teilen aus Datenbanken verwendet werden.

Ferner liegt es im bevorzugten Rahmen der vorliegenden Erfindung, wenn CAD/CAM-Verfahren enthalten sind, und/oder wenn die Erfassung von Objekten und insbesondere deren 3D-Daten und -Datensätzen unter Zwischenschaltung von Datenfernübertragung örtlich getrennt von der Herstellung von Primärteilen und/oder Zahnersatzteilen erfolgt, wobei vorzugsweise eine Erfassung an einer Mehrzahl von Orten durch Datenfernübertragung zu zentraler Erfassung und/oder Herstellung gekoppelt ist.

In Kombination mit den vorstehenden Ausgestaltungen von Oberflächenerfassungs- und/oder Erzeugungseinrichtungen, oder auch für sich alleine, schafft die Erfindung ferner solche Oberflächenerfassungs- und/oder Erzeugungseinrichtungen, bei denen Einrichtungen zur teil- oder vollautomatischen Randerkennung von Inlaypräparationen vorgesehen sind, und/oder bei denen Einrichtungen zur Herstellung von komplexen Zahnersatzkonstruktionen vorgesehen sind.

Analog enthalten die vorstehenden Oberflächenerfassungs- und/oder Erzeugungsverfahren gemäß der vorliegenden Erfindung jeweils einzeln oder in Kombination mit den vorstehend angegebenen Varianten solche Oberflächenerfassungs- und/oder Erzeugungsverfahren mit Verfahrensschritten zur teil- oder vollautomatischen Randerkennung von Inlaypräparationen, und/oder mit Verfahrensschritten zur Herstellung von komplexen Zahnersatzkonstruktionen.

Weitere vorteilhafte Ausgestaltungen der Erfindung sind durch Einrichtungen und Verfahren zur teil- oder vollautomatischen Randerkennung von Inlaypräparationen gegeben.

Darüber hinaus enthält die Erfindung weitere Varianten und Aspekte, die in der vorliegenden Beschreibung und den angefügten Zeichnungen anhand spezieller Ausgestaltungen oder in Form allgemeiner Angaben offenbart sind. Alle diese Varianten und Aspekte sind jeweils einerseits als für sich alleine offenbart und andererseits gesondert in jedweder Kombination mit anderen Aspekten und Varianten offenbart anzusehen, und auf jede Variante und jeden Aspekt alleine sowie jegliche Kombination von Aspekten und Varianten ist durch die vorliegende Offenbarung die Basis für eine Patentierung geschaffen.

Nachfolgend wird die Erfindung lediglich exemplarisch anhand von Ausführungsbeispielen unter Bezugnahme auf die Zeichnung näher erläutert, in der:
- Fig. 1a: eine schematische Draufsicht auf einen Kiefer mit eingezeichneten Abtaststreifen nach dem Stand der Technik ist,
- Fig. 1b: eine schematische Frontansicht eines Kiefers mit eingezeichneten Abtaststreifen gemäß Fig. 1a ist,
- Fig. 1c: eine schematische Draufsicht auf einen Kiefer mit eingezeichneten Abtaststreifen nach der WO 02/39056 A1 ist,
- Fig. 1d: eine schematische Frontansicht eines Kiefers mit eingezeichneten Abtaststreifen gemäß Fig. 1c ist,
- Fig. 2a: eine perspektivische schematische Ansicht eines Messobjektes in Form eines Zahnes ist,
- Fig. 2b: eine schematische Ansicht des Messobjektes aus der Fig. 2a mit eingezeichneten Abtaststreifen nach dem Stand der Technik ist,
- Fig. 2c: eine schematische Ansicht eines Signalbildes einer Abtastzeile aus der Fig. 2b ist,
- Fig. 2d: eine schematische Ansicht des Messobjektes aus der Fig. 2a mit eingezeichneten Abtaststreifen nach der WO 02/39056 A1 ist,
- Fig. 2e: eine schematische Ansicht eines Signalbildes einer Abtastzeile aus der Fig. 2d ist,
- Fig. 3: eine schematische perspektivische Ansicht eines Ausführungsbeispiels einer Oberflächenerfassungseinrichtung nach der WO 02/39056 A1 schräg von oben ist,
- Fig. 4: eine vergrößerte Darstellung eines Teils aus der Fig. 3 ist,
- Fig. 5: eine schematische perspektivische Ansicht des Ausführungsbeispiels der Oberflächenerfassungseinrichtung aus der Fig. 3 schräg von oben in einer anderen Einstellung und vergrößert ist,
- Fig. 6: eine schematische perspektivische Ansicht des Ausführungsbeispiels der Oberflächenerfassungseinrichtung aus der Fig. 3 schräg von unten und vergrößert ist,
- Fig. 7: eine schematische perspektivische Ansicht des Ausführungsbeispiels der Oberflächenerfassungseinrichtung aus der Fig. 3 schräg von unten und vergrößert sowie gegenüber der Ansicht aus der Fig. 6 etwas gedreht ist,
- Fig. 8: eine graphische Darstellung eines Kiefers mit schematisch eingezeichneten Lagen von Messstreifen auf der Basis von gemäß der WO 02/39056 A1 eingescannten Daten ist,
- Fig. 9: eine graphische Darstellung des Kiefers aus der Fig. 8 mit gemäß der WO 02/39056 A1 bearbeiteten Zähnen ist,
- Fig. 10: eine schematische Teilansicht eines Kiefers zur Erläuterung eines weiteren Aspektes der WO 02/39056 A1 ist,
- Fig. 11: eine schematische Seitenansicht eines Kau- oder Bißsimulators zur Verdeutlichung eines weiteren Aspektes der WO 02/39056 A1 ist,
- Fig. 12: eine schematische Seitenansicht eines Kiefers aus der Fig. 11 in einer Oberflächenerfassungseinrichtung ist,
- Fig. 13: eine schematische Ansicht eines Ausführungsbeispiels einer Oberflächenerfassungseinrichtung gemäß der WO 02/39056 A1 bei Abtastung einer vollständigen Kaufläche eine Zahnes sowie eine Skizze eines daraus resultierenden Messsignals ist,
- Fig. 14: eine schematische Ansicht eines Ausführungsbeispiels einer Oberflächenerfassungseinrichtung gemäß der WO 02/39056 A1 bei Abtastung einer Kaufläche eine Zahnes mit einem Loch zum einsetzen eines Inlays sowie eine Skizze eines daraus resultierenden Messsignals bei Abtastung am Rand des Loches ist,
- Fig. 15: Schemadarstellungen von beispielhaften Signalformen eines Signals 1, das von der Abtastung einer Fläche herrührt, eines Signals 2, das bei Erreichen eines Randes eines Loches in einer Fläche erhalten wird, und eines Signals 3 zeigt, das direkt an einem Rand eines Loches in einer Fläche erhalten wird,
- Fig. 16: ein Beispiel einer graphischen Darstellung von Messergebnissen einer Erfassung einer Zahnoberfläche,
- Fig. 17: schematische Darstellungen von zwei Verfahrenschritten bei der Herstellung eines Inlays gemäß einem Ausführungsbeispiel,
- Fig. 18: schematische Darstellungen von drei weiteren Verfahrenschritten bei der Herstellung eines Inlays gemäß dem Ausführungsbeispiel aus der Fig. 17,
- Fig. 19: eine schematische Darstellung eines noch weiteren Verfahrensschrittes bei der Herstellung eines Inlays gemäß dem Ausführungsbeispiel aus der Fig. 17,
- Fig. 20a/b: schematische Darstellungen einer Vereinfachung bei der Herstellung von Zahnersatz gemäß einem weiteren Aspekt der vorliegenden Erfindung,
- Fig. 21a/b: schematische Darstellungen einer Vereinfachung bei der Herstellung von Zahnersatz gemäß noch einem weiteren Aspekt der vorliegenden Erfindung, und
- Fig. 22: eine schematische Darstellung des Ergebnisses der Vorgehensweise gemäß den Fig. 21 a/b.

In den einzelnen Figuren der Zeichnung sind gleiche oder ähnliche oder gleich oder ähnlich wirkende Teile mit denselben Bezugszeichen versehen oder vergleichbar dargestellt, so dass sich Teile sowie deren Kombinationen, Funktionen und Wirkungsweisen für einen Fachmann auch aus der Betrachtung der Figuren der Zeichnung alleine, deren Vergleich und/oder den nachfolgend beschriebenen Angaben ggf. alleine ohne weiteres erschließen, auch wenn keine Bezugnahmen zwischen einzelnen Figuren und/oder zwischen Figuren und Text explizit angegeben oder dargestellt sind.

Zunächst werden unter Bezugnahme auf die Figuren 1 bis 12 die technischen Lehren gemäß dem Offenbarungsgehalt der WO 02/39056 A1 erläutert, insbesondere um die Funktion eines entsprechenden Gerätes und Verfahrens sowie Grundsätze bei der Herstellung von Zahnersatz zu verstehen. Diese Technologie gemäß der WO 02/39056 A1 kann als Basis für die einzelnen Aspekte der vorliegenden Erfindung dienen und mit letzterer kombiniert werden, was jeweils jedoch nicht zwingend für die Realisierung der einzelnen Aspekte der vorliegenden Erfindung ist. Letztere kann gemäß jedem ihrer Aspekte auch ohne die Technologie gemäß der WO 02/39056 A1 in Verbindung mit anderen Technologien realisiert und eingesetzt werden.

In den Fig. 1 und 2 ist schematisch eine Abtastung eines Kiefers K in einer Draufsicht bzw. einer Frontansicht verdeutlicht. Beispielsweise werden fünf Messstreifen S1, S2, S3, S4 und S5 nebeneinander erfaßt. Die fünf Messstreifen S1 bis S5 überlappen in Bereichen B, die in der Fig. 1a schraffiert dargestellt und in der Fig. 1b der Übersichtlichkeit halber weggelassen sind; Die Fig. 1b dient nur der Verdeutlichung der Lage der Messstreifen S 1 bis S5 in der Frontansicht des Kiefers K sowie der Richtung der Abtaststrahlung gemäß den Pfeilen P. Die Überlappungsbereiche B ermöglichen das Zusammenfügen der Daten der einzelnen Messstreifen durch Matching-Verfahren zu einem Gesamtbild des Kiefers K.

Eine Variante der vorstehenden Technologie nach der WO 02/39056 A1 ist in den Fig. 1c und 1 d ebenfalls in einer Draufsicht bzw. einer Frontansicht gezeigt. Bei dieser Methodik und mit den entsprechenden Einrichtungen werden Messstreifen S6, S7, S8, S9, S10, S11, S12 und S13 erzeugt, die jedoch nur aus sogenannten Halbbildern bestehen, so dass zwar mehr Messstreifen als bei der Variante nach den Fig. 1a und 1b erzeugt und behandelt werden, diese Messstreifen aber mit deutlich geringerem Datenumfang auskommen. Die Lage der Messstreifen S6 bis S 13 ist in der Draufsicht der Fig. 1 c bezüglich des Kiefers K dargestellt. Die Bestrahlungsrichtungen sind durch Pfeile P1, P2, P3 und P4 exemplarisch für die Messstreifen S6, S11, S 13 bzw. S 10 in der Fig. 1d schematisch dargestellt. In der Fig. 1c sind wiederum Überlappungsbereiche B der einzelnen benachbarten Messstreifen schraffiert eingezeichnet. Durch die bezüglich dem Stand der Technik geänderten Bestrahlungsrichtungen für die einzelnen Messstreifen werden genauer Daten des Kiefers K erhalten, und zwar mit geringerem Daten- und Verarbeitungsaufkommen als beim Stand der Technik durch Verwendung von nur Halbbildern.

Ein einzelnes Messobjekt in Form eines Zahnes Z ist schematisch in einer perspektivischen Ansicht in der Fig. 2a gezeigt, wie es auf einem Messtopf M installiert ist, der zu diesem Zweck beispielsweise mit einer Knetmasse gefüllt ist, in die der Zahn Z mit seinem unteren Ende (nicht sichtbar) gesteckt ist.

Für diese Messobjekt Z ist in der Fig. 2c die Lage von Messstreifen oder Messzeilen S schematisch dargestellt, und die Fig. 2c zeigt das Signalbild für einen Messstreifen oder eine Messzeile Sx, in der lediglich ein Messpunkt Dx erhalten wird. In der Fig. 2b ist noch die Ausleserichtung (Zeilenrichtung) mit dem Pfeil A1 eingezeichnet. Die Summe aller Messstreifen oder Messzeilen S bildet die Fläche eines Chips C als Bilderfassungseinrichtung, bei dem es sich beispielsweise um einen CCD-Chip oder jegliche andere Kameraeinrichtung handeln kann.

Dagegen wird in einer Messzeile oder in einem Messstreifen S gemäß der WO 02/39056 A1 eine Mehrzahl von Messpunkten, z.B. Dy1 und Dy2 oder Dza bis Dzn, erhalten, wie die Fig. 2d und 2e verdeutlichen, bei denen es sich um Darstellungen analog den Fig. 2b bzw. 2c handelt. Die Ausleserichtung ist dabei gemäß dem Pfeil A2 in der Fig. 2d und der Chip C sowie die Lage der Messstreifen oder Messzeilen S sind gegenüber dem Stand der Technik folglich um 90° gedreht. Durch diese Anordnung werden in der Messzeile Sy zwei Messpunkte Dy1 und Dy2 erhalten. Die Messung in der Zeile Sz führt sogar zu einer Vielzahl von Messpunkten Dza bis Dzn. Für die Auswertung wird dann vorzugsweise mittels einer Software die Chipanordnung wie beim Stand der Technik (siehe Fig. 2b) rückgerechnet und simuliert. Die damit wieder wie beim Stand der Technik erhaltene Ausleserichtung enthält aber wiederum je Linie oder Zeile mehrere Messpunkte, die rechnerisch erfaßt werden können als zunächst 1. Punkt, dann 2. Punkt usw. Durch diesen Aspekt der WO 02/39056 A1 werden bei geringerem Aufwand durch Heranziehung nur von Halbbildern dennoch mehr Informationen erhalten, so dass die Genauigkeit durch die WO 02/39056 A1 gegenüber dem früheren Stand der Technik noch zunimmt.

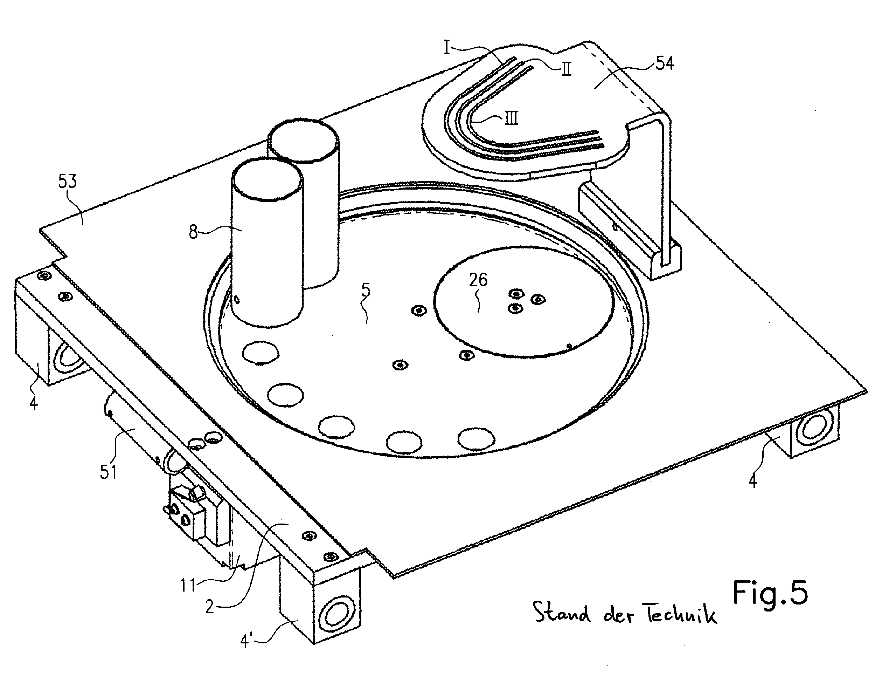

In den Fig. 3 und 4, die eine vergrößerte Darstellung eines Teils der Fig. 3 ist, ist eine Oberflächenerfassungseinrichtung 1 mit einer Laseroptik 4 dargestellt, von der ein Laserlinienstrahl L ausgeht. Der Schnittpunkt des Laserlinienstrahls L mit dem rechteckigen, vom Objektiv ausgehenden Bildfeld F definiert das Messfeld F. Jedes zu vermessende Objekt muß durch dieses Messfeld F durchgefahren werden. Diese Einzelheit gilt auch für die Ausgestaltungen gemäß den Fig. 5, 6 und 7, auch wenn sie dort aus Darstellungszwecken der übrigen Merkmale nicht mehr gezeigt ist. Insofern wurde zur Vermeidung von Wiederholungen bei der nachfolgenden Befassung mit den Fig. 5, 6 und 7 darauf nicht mehr eingegangen; der Einsatz dieser Technik ist jedoch für den Fachmann selbstverständlich als auch dort einsetzbar zu erkennen und zu verstehen.

Nachfolgend wird, soweit die Ausgestaltung identisch oder vergleichbar ist, zur Vermeidung von Wiederholungen auch auf die Fig. 5, 6 und 7 Bezug genommen.

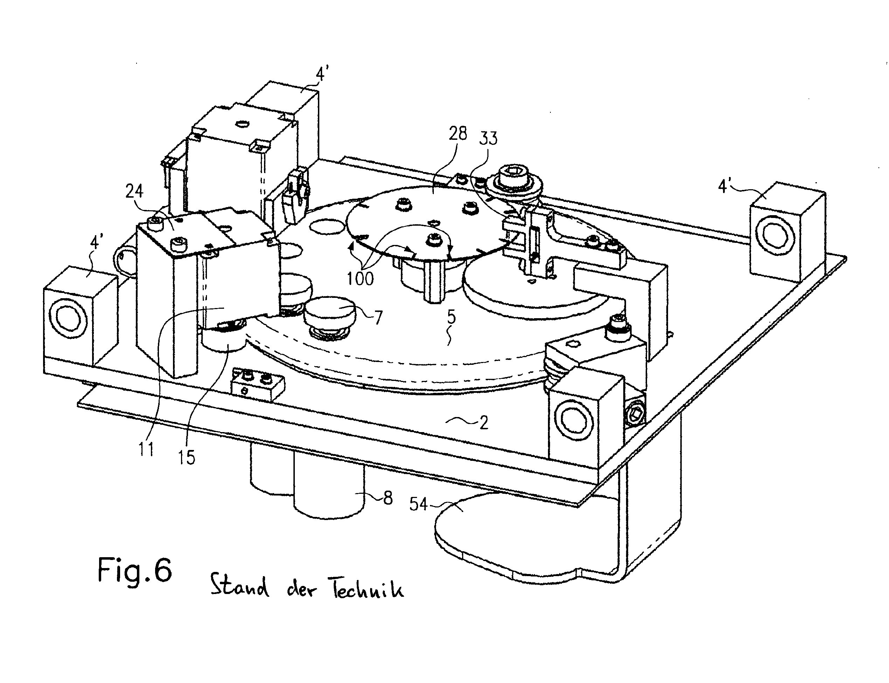

Das "Durchfahren" des Messfeldes F wird mittels einer Linearführung 83 (oder Bezugszeichen 4' in den Fig. 5 und 6) bewerkstelligt. Um mehrere Einzelobjekte, wie insbesondere Zähne, unter dem Messfeld positionieren zu können, rotiert ein Drehteller 33 (oder Bezugszeichen 5 in den Fig. 5, 6 und 7) von Messtopf 84 zu Messtopf 84 (in der Fig. 5 sind die Messtöpfe mit dem Bezugszeichen 8 bezeichnet). In der Fig. 3 sind exemplarisch nur zwei Messtöpfe 84 eingezeichnet (ebenfalls in der Fig. 5 z.B. nur zwei Messtöpfe 8), wobei beispielsweise sieben Stück insgesamt montiert werden können.

Ist ein mit einem Zahn bestückter Messtopf 84 (oder 8 in der Fig. 5) im Messfeld angelangt, so stoppt die Rotation des großen Drehtellers 33 (oder 5 in den Fig. 5, 6 und 7). Der Drehteller 33 (oder 5 in den Fig. 5, 6 und 7) dient also nur zur Positionierung der mit Einzelzähnen bestückten Töpfe 84 (oder 8 in Fig. 5) und/oder eines Kiefers, worauf später eingegangen wird. Die Messung selbst erfolgt, wie oben erläutert wurde, mittels einer Linearbewegung des Messtisches 53 auf den Linearlagern 83 oder 4' (Fig. 5).

Es entsteht ein Messstreifen, der nur eine Seite des zu vermessenden Zahnes sieht. Um weitere Messstreifen aus weiteren Blickwinkeln erfassen zu können, kann der sich im Messbereich befindliche Topf 84 (oder 8 in der Fig. 5) zwischen den einzelnen Messungen um eine eigene Achse gedreht werden. Dies führt z.B. zu acht Ansichten bzw. der Topf 84 (oder 8 in der Fig. 5) wird zwischen den Messungen um jeweils 45° um seine eigene Achse gedreht. Es entstehen in einem solchen Fall also acht Messstreifen aus verschiedenen Ansichten. Teile der gewonnenen Oberflächeninformationen kommen in mehreren Messstreifen vor. Mittels dieser Überlappungsbereiche können geeignete Einrichtungen oder Verfahren in Form beispielsweise einer bereits weiter oben erläuterte Matching-Software die einzelnen Messstreifen zu einem kompletten 3D-Oberflächenbild eines Einzelzahns mit hoher Messgenauigkeit zusammensetzen.

Mit diesen Daten kann nun bereits der Innendatensatz einer Zahnkrone gefräst werden. Neben Einzelkronen können auch mehrfache Einzelzähne zu einer Brücke zusammengefaßt werden. Um Brücken fräsen zu können, muß die räumliche Lage mehrerer Einzelkronen zueinander möglichst schnell erfaßt werden. Dazu wird ein komplettes Kiefermodell auf dieselbe Weise wie der Einzelzahn vermessen. Es wird auf einen zusätzlichen Drehteller 26 gestellt, der in dem Drehteller 5 in der Fig. 5 vorgesehen ist.

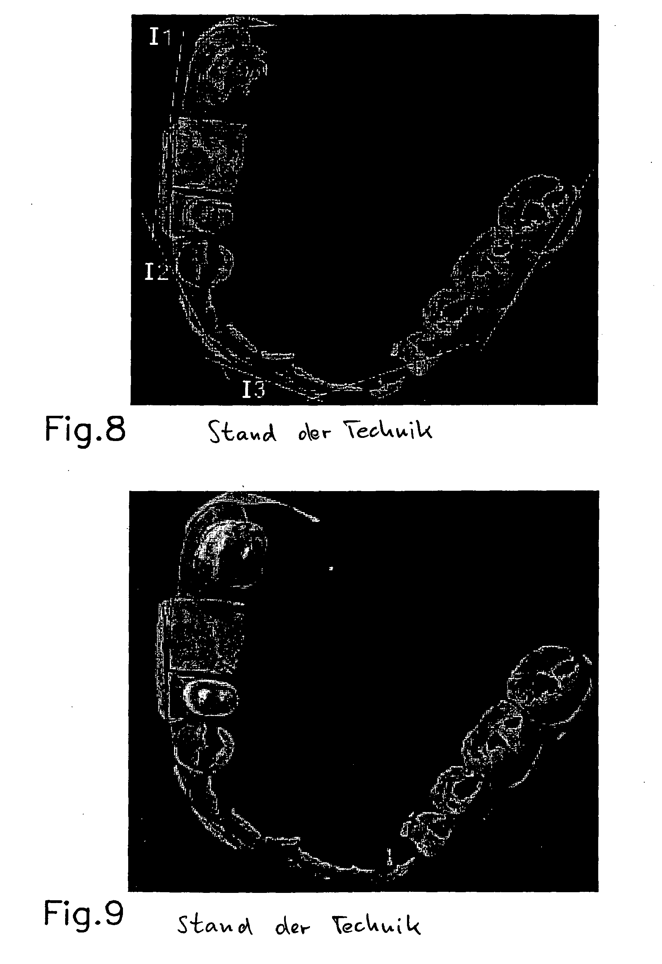

Das Ergebnis ist im Bild der Fig. 8 zu sehen. Die Richtung der Messstreifen sind als fünf weiße Linien (exemplarisch angegeben sind die Bezeichnungen I1, I2 und I3 und im übrigen sind nur die Linien eingezeichnet) zu erkennen. Dieses Messergebnis enthält zwar nicht alle Daten des Kiefers, jedoch sind außenseitig ausreichend viele Daten vorhanden, um diese mit den Daten der Einzelstümpfe automatisch machen zu können.

Danach beginnt mit geeigneten Einrichtungen oder verfahrensmäßig ein Software-Suchlauf, der die Daten zur Übereinstimmung bringt. Das Ergebnis sieht man im Bild der Fig. 9. Die beiden hervorgehobenen Datensätze des ersten Zahns oben links und des nächsten Zahns in dem Kiefermodell nach der Lücke stellen die referenzierten Einzelzähne dar.

Nachfolgend werden weitere Verbesserungen dargestellt und erläutert.

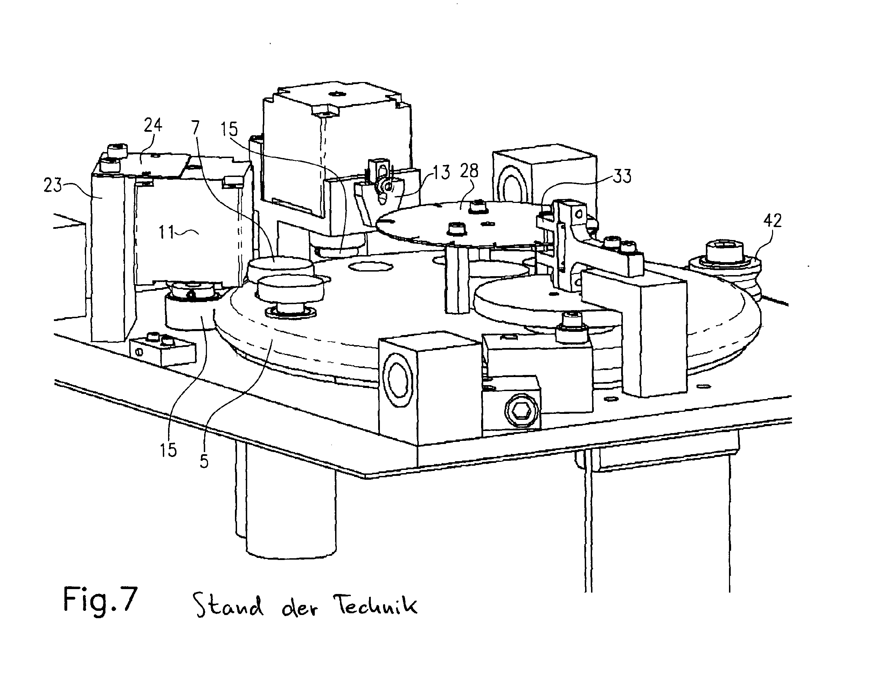

Unter Bezugnahme auf die Fig. 5, 6 und 7, wobei die Fig. 5 eine perspektivische Draufsicht und die Fig. 6 und 7 perspektivische Unteransichten derselben Vorrichtung darstellen, dient ein Drehteller 5 dazu, verschiedene Messtöpfe 8 für Einzelzähne unter die Lasermessanordnung (vergleiche Fig. 3) zu transportieren. Dieser Drehteller 5 wird mit einem Reibrad 15 (siehe Fig. 6) angetrieben. Dieses Reibrad 15 wird mittels eines Federblechs 24 (siehe Fig. 6) stirnseitig an den Drehteller 5 angedrückt. Dadurch wird ein etwaiger Verschleiß einer Gummioberfläche oder des Gummimaterials des Reibrades 15 ausgeglichen.

Die Position des Drehtellers 5 wird mittels einer Encoderscheibe 28 festgestellt. Im vorliegenden Fall ist die Scheibe als Blech 28 (siehe Fig. 6) ausgeführt, das Schlitze 100 genau an den Stellen aufweist, an denen benötigte Stopp-Positionen liegen. Die Schlitze 100 werden mittels einer Lichtschranke 33 (siehe Fig. 6) erkannt. In einer geeigneten Einrichtung oder verfahrensmäßig wertet eine Steuerungssoftware die Lichtschrankensignale aus und startet/stoppt den Tisch oder Teller 5. Der Drehteller 5 enthält sieben Positionen/Töpfe für Einzelzähne. Sollte eine Arbeit mehr als sieben Präparationen/Zähne enthalten (maximal sind 14 pro Kiefer möglich), so kann die Arbeit in 2 Chargen gescannt werden.

Vorteile der vorstehend erläuterten Vorrichtungen:
- sehr günstige Herstellkosten,
- überall verfügbar.
- kein Verschleiß
- Laufruhe
- exakte Positionskenntnis

Alternativ zum Reibrad 15 kann beispielsweise auch ein Riemenrad oder ein Zahnriemen eingesetzt werden.

Durch weitere Maßnahmen kann auch noch eine Verbilligung der Rahmenkonstruktion erreicht werden. Dazu ist der Rahmen des Gerätes / der Vorrichtung auf zwei Führungsstangen 83 (vergleiche Fig. 3 und 4) aufgehängt. Der komplett Rahmen des Gerätes besteht also lediglich aus zwei Seitenteilen 2 (vergleiche Fig. 3 und 4), den Führungsstangen 83 (vergleiche Fig. 3 und 4) sowie einer Optikplatte (Fig. 5). Ungenauigkeiten, die durch die mechanische Ausführung der Linearstangenführung entstehen, werden durch Software (z.B. mittels sogenannten "Look-Up-Tables") ausgeglichen. Eine Präzisionsspindel 94 (vergleiche Fig. 3 und 4) ist auf der Seite des Verfahrtisches angebracht, auf der sich die Laseranordnung befindet. Winkelfehler der Spindel wirken sich dadurch weniger aus. Die Vorteile dieser Ausgestaltung sind geringe Herstellungskosten, hohe Präzision, deutlich geringeres Transportgewicht und kleinere Bauweise.

Eine weitere Verbesserung gegenüber dem Stand der Technik vor der WO 02/39056 A1 kann zum elektrischen Schutz der Laserdiode vorgenommen werden. Dazu sind die Laseroptik, die Laserdiode und die Ansteuerelektronik für die Laserdiode zusammen in einem Metallgehäuse untergebracht. Daraus ergibt sich als Vorteile ein besserer Schutz für die Diode, insbesondere gegen elektrostatische Aufladungen von außen, sowie ein schneller Austausch bei Reparaturfällen.

Weiterhin sind gemäß der WO 02/39056 A1 gegenüber deren Stand der Technik Verbesserungen bei der Einjustierung von Kiefermodellen möglich. Um zu vermessende Kiefermodelle optimal auf den Messbereich einjustieren zu können, benötigt man eine Schablone 54 (siehe Fig. 5). Da es Kiefermodelle mit verschiedenen Durchmessern gibt (z.B. für Kinder und Erwachsene), muß das Kiefermodell entsprechend der Größe angepaßt werden. Zu diesem Zweck werden beispielsweise 3 verschiedene Justagekonturen I, II und III auf die transparente Plexiglasscheibe, aus der die Schablone 54 vorzugsweise gebildet ist, graviert oder anderweitig geeignet aufgebracht.

Ferner lassen sich bei der Drehung der Einzeltöpfe um z.B. jeweils 45° weitere Verbesserungen erreichen. Der Drehteller 5 (Fig. 5, 6 und 7) transportiert die Einzeltöpfe 8 zur Messposition vor dem Reibrad 15. Während der Drehteller 5 verfährt, wird der Reibkontakt des Topfes 8 zum Reibrad 15 automatisch hergestellt. Die Neuerung besteht darin, dass das Reibrad 15 aus Gummi besteht oder zumindest eine Gummi-Laufoberfläche hat, das Gegenrad 7 jedoch aus Vollmetall. Dies hat die Vorteile eines geringeren Preises, einer einfachen Fertigung sowie einer hohen Lebensdauer.

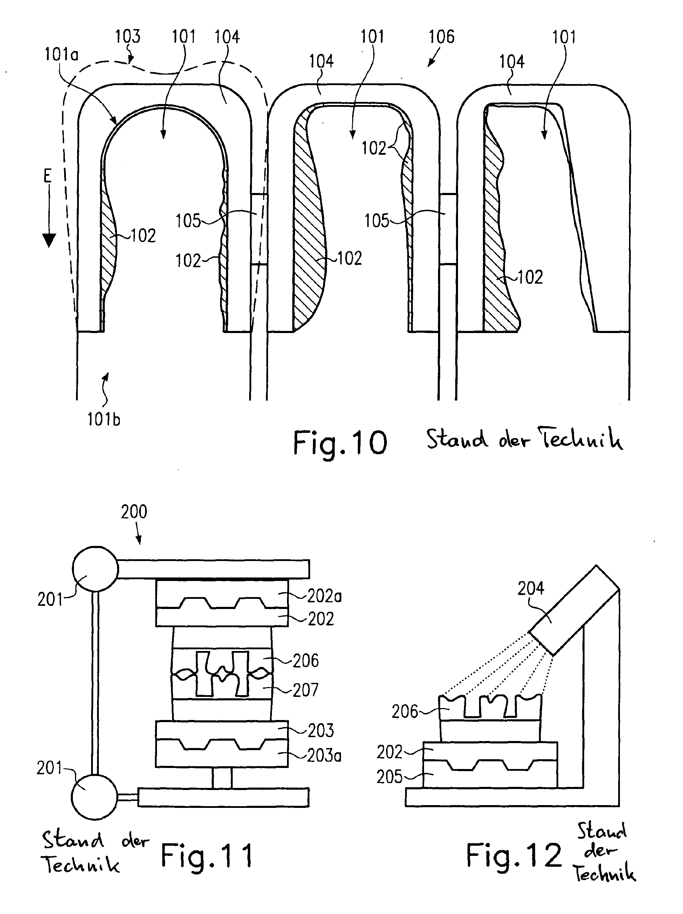

Ein weiterer Aspekt der WO 02/39056 A1 wird unter Bezugnahme auf die Fig. 10 erläutert. Dargestellt sind 3 Zahnstümpfe 101, bestehend jeweils aus einem beschliffenen Teil 101a und einem Restzahnbereich 101b. Das Beschleifen erfolgt manuell von einem Zahnarzt und führt zwangsweise zu Hinterschneidungen 102, die bei Betrachtung mehrerer nebeneinander liegender Einzelzähne bzw. deren Stümpfe 101 in Form, Lage und Größe unterschiedlich ausfallen.

Auf die Zahnstümpfe 101 zum Aufbau einer angestrebten Prothese 103, deren Gesamtsilhouette lediglich exemplarisch beim in der Fig. 10 ganz links gezeigten Stumpf 101 gestrichelt dargestellt ist, wird zunächst für wenigstens einen Stumpf 101 ein sogenanntes Käppchen 104 hergestellt, das in der Regel in genau einer Einschub- oder Aufsteckrichtung gemäß dem Pfeil E über den Stumpf 101 geschoben werden kann. Dabei ist es nicht möglich, dass das Käppchen 104 die Hinterschneidungen 102 füllt, da ein Aufschieben sonst nicht mehr möglich wäre. In dem im Zusammenhang mit dem vorliegenden Ausführungsbeispiel gezeigten Fall liegen 3 Stümpfe 101 nebeneinander und sind entsprechend 3 Käppchen 104 zu einer Brücke zusammengefaßt, indem jeweils benachbarte Käppchen 104 mittels jeweils einem Steg 105 verbunden sind.

Bei der Gestaltung der Gesamtheit aller Käppchen 104 muß nun eine optimale Einschub- oder Aufsteckrichtung ermittelt werden, bei der die Hinterschneidungen 102, die sich beispielsweise auch durch bezüglich der anderen Stümpfe 101 Schräglage eines Stumpfes 101, wie in der Fig. 10 beim ganz rechten Stumpf 101 gezeigt ist, bilden, minimiert werden.

Dies kann mittels der von den Stümpfen 1 erhaltenen 3D-Daten vorab durchgeführt werden. Dazu wird, wie im übrigen bereits in den vorliegenden Unterlagen ausführlich dargestellt ist, ein 3D-Datensatz mittels Scannen gemäß der WO 02/39056 A1 erstellt und für Modellrechnungen zur Ermittlung der optimalen Einschub- oder Aufsteckrichtung verwendet. Bei diesem Aspekt des Verfahrens gemäß der WO 02/39056 A1 werden nacheinander verschiedene Aufsteckrichtungen zu Grunde gelegt und für die jeweiligen Resultate der "Totraum", der durch die Hinterschneidungen 102 bedingt ist, ermittelt. Die optimale Einschubrichtung A wird dadurch erhalten, dass die Variante mit dem kleinsten "Totraum" bestimmt wird.

Insbesondere durch eine Schräglage eines verbliebenen Stumpfes 101, aber auch infolge anderer Bearbeitungsungenauigkeiten durch den Zahnarzt können Fälle auftreten, in denen ein Käppchen bezogen auf einen Restzahnbereich 101b stellenweise eine Wanddicke von 0 mm haben müßte. In einem solchen Fall ist grundsätzlich keine Prothese herstellbar. Es müssen für die weitere Vorgehensweise zunächst zeit- und kostenaufwendige Nachbearbeitungen eines entsprechenden Zahnstumpfes 101 erfolgen, wobei diese Arbeiten nicht sicher zu einem brauchbaren Ergebnis führen.

Neben der Optimierung der Einschubrichtung E gemäß der WO 02/39056 A1 zur Minimierung der Hinterschneidungen oder "Toträume" 102 kann die WO 02/39056 A1 zu einer weiteren Verbesserung der Vorgehensweise zur Herstellung von Zahnprothesen genutzt werden. Mittels der erfaßten (gescannten) 3D-Daten lassen sich Empfehlungen für den behandelnden Zahnarzt erstellen, durch welche Nachbearbeitungen der Zahnstümpfe eher eine Verbesserung von Sitz und Stabilität der herzustellenden Prothese, einschließlich deutlicher Verringerung der Hinterschneidungen oder der "Toträume" 102 erreicht werden können. Dazu wird das Verfahren gemäß der WO 02/39056 A1 dahingehend erweitert, dass bezüglich eines erfaßten 3D-Datensatzes von einem Zahnstumpf 101 oder in Kombination mehreren Zahnstümpfen 101 eine optimale Aufsteckrichtung für Käppchen 104, insbesondere eine Verbindung von mehreren Käppchen 104 zu einer Brücke 106, unter der Maßgabe berechnet wird, dass Formänderungen an dem Zahnstumpf/den Zahnstümpfen 101 möglich sind. Das Verfahren und System gemäß der WO 02/39056 A1 dient damit nicht nur dazu, eine Anpassung an gegebene Umstände für die Herstellung und das Aufstecken von Käppchen 104 oder Brücken 106 zu ermitteln, sondern auch dazu, die gegebenen Umstände zu verändern, um das Ergebnis, d. h. die Prothese, zu optimieren. Beispielsweise kann bei dem Verfahren und System vorgesehen sein, dass eine graphische Anzeige der Stümpfe einschließlich z.B. speziell eingefärbter Bereiche für Nachbearbeitungen enthalten ist, die als Grundlage für einen Dialog zwischen einem Zahnlabor und einem Zahnarzt dient.

Durch die WO 02/39056 A1 mit ihren vorstehend erläuterten Ausprägungen wird in vorteilhafter Weise ferner die Möglichkeit für eine Qualitätssicherung geschaffen, einschließlich insbesondere eindeutigen Zuordnungen von Behandlungsergebnissen zum Zahnarzt, der die Zahnstümpfe zurecht schleift, oder zum Zahnlabor, das die Käppchen/Kronen/Brücken anfertigt. Streitigkeiten wegen Paßungenauigkeiten können damit erstmals eindeutig geklärt werden. In vorteilhafter Weise kann dabei ferner ausgenutzt werden, dass sämtliche Anfangsdaten sowie auch Daten von zwischen Zuständen lückenlos auf besonders einfache Weise und jederzeit wieder zugreifbar archiviert werden können.

Das vorstehend unter Bezugnahme auf die Fig. 10 erläuterte Verfahren und seine Varianten ist äquivalent zu entsprechend ausgebildeten Einrichtungen, mittels denen diese Verfahren durchgeführt werden können, so dass auch solche Einrichtungen, die dem Fachmann durch die Darstellungen der Verfahren in ihren allgemeinen und speziellen Ausprägungen ohne weiteres sofort klar sind, als in den vorliegenden Unterlagen offenbart gelten.

Ein weiterer Aspekt der WO 02/39056 A1 befaßt sich mit der automatischen Generierung der Kaufläche einer Zahnprothese unter Berücksichtigung des Gegenbisses (Oberkiefer zu Unterkiefer). Bei dem in den Fig. 11 und 12 verdeutlichten Ausführungsbeispiel sind die nachfolgend erläuterten Schritte vorgesehen:
1. Einsetzen und Einjustieren von Ober- und Unterkiefer 206 bzw. 207 in einen Kausimulator oder Artikulator 200 mit Einstellgelenken 201, bis die Bißsituation simuliert ist, gemäß der Fig. 11. Die Aufnahmen 202/202a und 203/203a von Ober- und Unterkiefer 206 bzw. 207 haben eine erfassbare räumliche Lage. Dazu haben die Aufnahmen 202/202a und 203/203a z.B. jeweils eine definierte Null-Lage oder eine Null-Lage zueinander. Jede Aufnahme 202/202a und 203/203a ist zweiteilig und besteht jeweils aus einer Aufnahmenbasis 202a bzw. 203a, die fest am Artikulator 200 installiert ist, und eine Kieferhalterung 202 bzw. 203, an der jeweils der Oberkiefer 206 bzw. der Unterkiefer 207 angebracht wird.
2. Einlesen / Aufnehmen von z.B. 6 Freiheitsgraden:
   2 Möglichkeiten: - Manuelles ablesen einer Skala
      - Auslesen von Messgebern
   Mit dem Artikulator 200 wird unter Berücksichtigung von Ober- und Unterkiefer 206 bzw. 207 die optimale/richtige Stellung der Aufnahmen 202/202a und 203/203a, d.h. eigentlich der jeweiligen Aufnahmenbasis 202a bzw. 203a ermittelt, gemäß der Fig. 11. Dies kann an dafür an dem Artikulator 200 vorgesehenen und angebrachten Skalen (nicht gezeigt) oder mittels Weg- und Winkelgebern (nicht gezeigt) automatisch geschehen. Zu beachten ist noch, dass der Artikulator 200 vorzugsweise eine Einstellung von Ober- und Unterkiefer 206 bzw. 207 zueinander in vorzugsweise sechs Freiheitsgraden ermöglicht.
3. Einsetzen der entsprechenden Kieferhalterung 202 oder 203 mit dem Oberkiefermodell 206 oder dem Unterkiefermodell 207 in eine Halterung 205 analog zu den Aufnahmebasen 202a und 203a des Scanners 204 gemäß Fig. 12, wobei die räumlichen Lage der Halterung 205 zum Messsystem oder dem Datensystem des Scanners 204 bekannt ist.
4. Durch Software erfolgt dann eine Referenzierung.
5.
   - Vorschlag aus Datenbank für Kaufläche (z.B. Schneidezahn)
   - Automatische Anpassung des Datenbankmodelles an die Gegenbisssituation
   - Suche von Kontaktpunkten mit Hülldaten
   - Zusammenführen von Kaufläche und Innendatensatz

Alternative: Kieferstellung "artikuliert" erfassen durch Scannen eines Teils der artikulierten Kiefer und anschließendes Matchen von Ober- und Unterkieferdaten mit diesen Teildatensätzen zur Erzeugung der Bißstellung.

Auch der vorstehend unter Bezugnahme auf die Fig. 11 und 12 erläuterte Aspekt der WO 02/39056 A1 ist als verfahrens- und vorrichtungsmäßig offenbart anzusehen, da ein Fachmann ohne weiteres anhand der vorstehenden Erläuterungen geeignete Einrichtungen in allgemeiner oder spezieller Ausgestaltung erkennt.

Die vorliegende Erfindung wird hinsichtlich ihrer einzelnen Aspekte nachfolgend näher erläutert, wobei für einen Fachmann im einzelnen jeweils ohne weiteres deutlich ist, welche Angaben und Darstellungen lediglich exemplarisch zu verstehen sind. Weiterhin erkennt ein Fachmann ohne spezielle Darstellungen vorteilhafte Kombinationen sowie deren Gestaltungen und Wirkungen der nachfolgenden Einzelheiten in der Zusammenschau und im Zusammenwirken mit dem vorstehend beschriebenen und insofern auch in der Zeichnung dargestellten Stand der Technik, was ebenfalls zum erfindungswesentlichen Offenbarungsgehalt der vorliegenden Unterlagen gehört. Außerdem gehen für einen Fachmann die Analogien zwischen Vorrichtungen und Verfahren gemäß der vorliegenden Erfindung klar aus den gesamten Unterlagen hervor, ohne dass jeweils getrennte Beschreibungen und Darstellungen für Vorrichtungen und Verfahren, die demselben Zweck dienen, erforderlich wären. Wesentlich ist jedoch, dass die nachfolgend dargelegten einzelnen Aspekte der vorliegenden Erfindung mit insbesondere dem vorstehend abgehandelten Stand der Technik, vor allem gemäß der WO 02/39056 A1, nicht zwingend zu kombinieren sind, sondern auch mit jeglicher anderen geeigneten Technik umgesetzt werden können. So sind Oberflächenerfassungstechnologien unter Verwendung von mechanischer Abtastung, anderen optischen Abtastsystemen und -verfahren und jegliche andere geeignete Abtasttechnik mit den einzelnen Aspekten der vorliegenden Erfindung kombinierbar. Zur Materialbearbeitung insbesondere im Hinblick auf die Formung von Zahnersatzteilen sind neben der Frästechnik auch andere Techniken, wie z.B. Gußtechniken, Lasertsintern usw. im Zusammenhang mit den einzelnen Aspekten der vorliegenden Erfindung verwendbar.

Erfindungsgemäß werden bei einem ersten Aspekt der vorliegenden Erfindung insbesondere geschaffen Einrichtungen und Verfahren zur teil- oder vollautomatischen Randerkennung von Inlaypräparationen und noch weitergehender zur Herstellung von Inlays als Zahnersatzteile. Eine entsprechende Einrichtung ergibt sich für den Fachmann aus den nachfolgenden Darstellungen und den darin angegebenen Figuren der Zeichnung ohne weiteres.

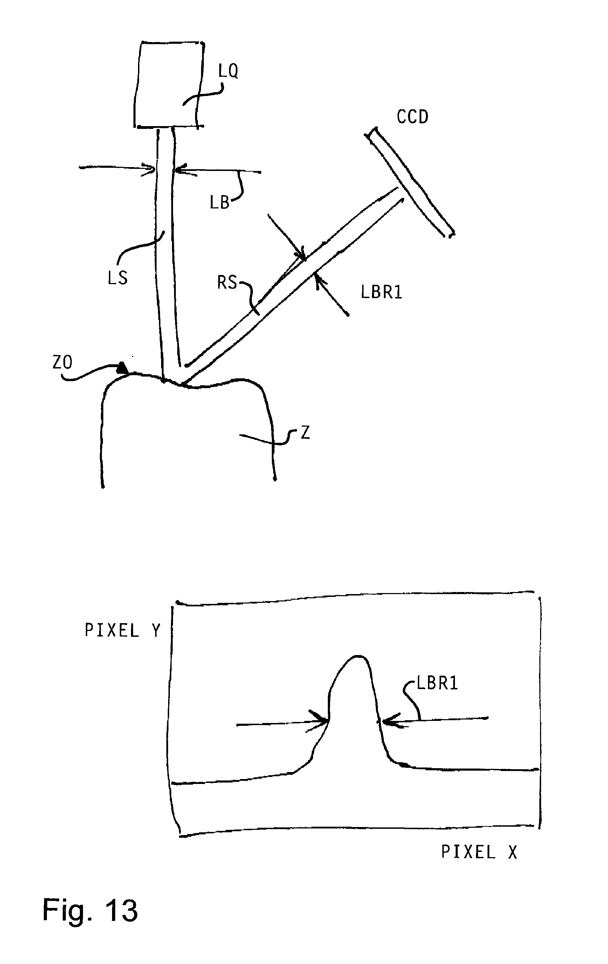

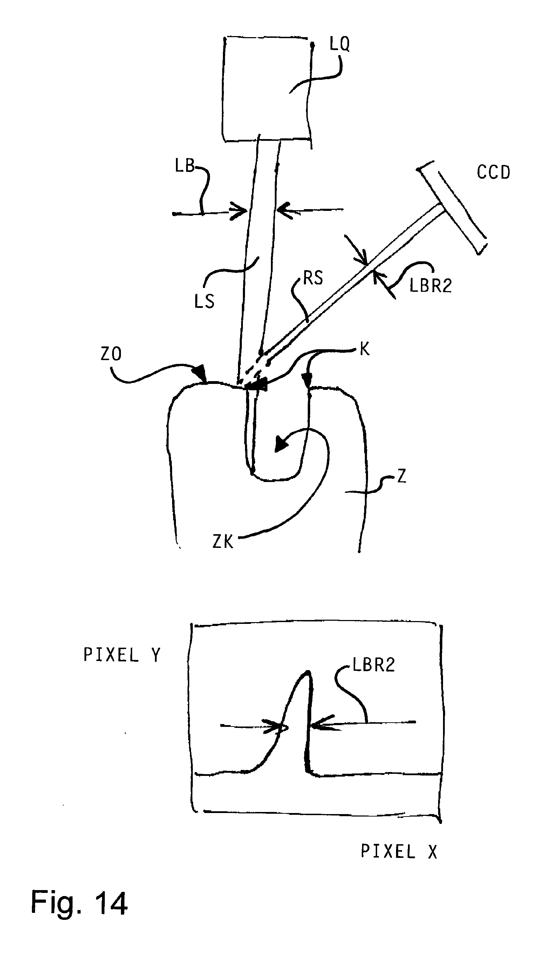

Bei der Herstellung von den genannten Zahnersatzteilen, nämlich vorzugsweise Zahninlays, wobei artverwandte andere Zahnersatzteile ebenso mit abgedeckt sein sollen, mittels der CAD/CAM Methode besteht die besondere Schwierigkeit, einen 3D-Flächendatensatz eines durch den Zahnarzt für ein Inlay präparierten Zahnstumpfes mittels Software so zu analysieren, dass von der Software automatisch erkannt wird, wo die Grenze zwischen zu fertigendem Inlay und verbleibender Zahnsubtanz verläuft. Charakteristisch für eine Inlaypräparation ist der scharfkantige Rand der Präparation wie durch den Vergleich der Fig. 13 und 14 verdeutlicht ist. Das nachfolgend beschriebene erfindungsgemäße Verfahren, sowie die sich daraus für einen Fachmann ohne weiteres ergebende entsprechende Einrichtung beinhaltet die automatischen Erkennung und Abtrennung dieser Grenze.

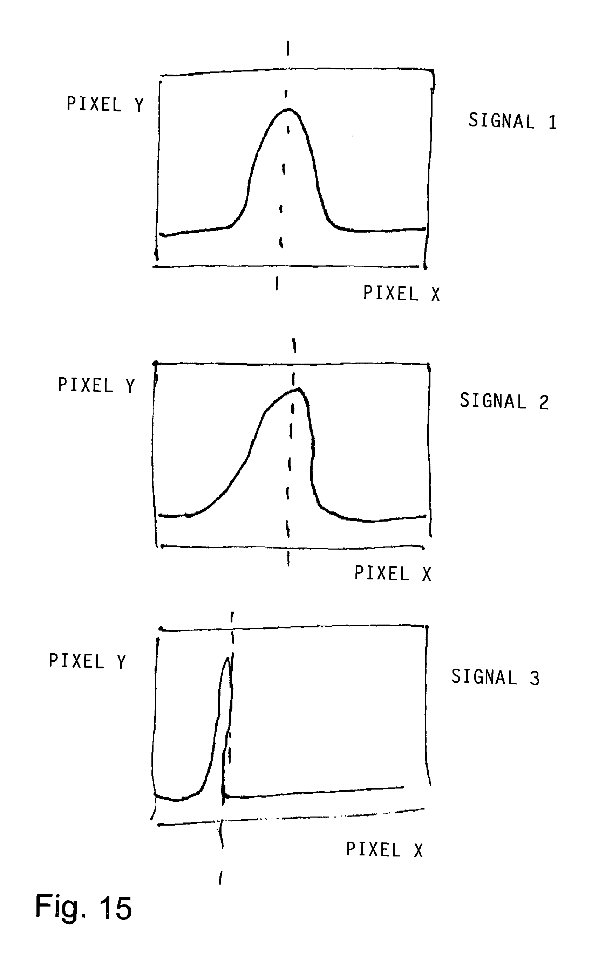

Bereits bei einem Messverfahren beispielsweise per Laser wie bei dem Stand der Technik gemäß der WO 02/39056 A1 oder DE 19721688 A1 enthält das auszuwertende Lichtsignal auf dem Kamerachip eine für das beschriebene Verfahren wesentliche Information: Während die Laserlinie eine Flächenteil berührt, der keine Kante enthält, wie in der Fig. 13 veranschaulicht ist, wird die volle Breite des Laserstrahls reflektiert. In der Fig. 13 ist ein Zahn Z mit einer Zahnoberfläche ZO gezeigt, auf die ein Laserstrahl LS von einer Laserlichtquelle LQ mit einer Strahlbreite LB auftrifft. Das reflektierte Strahl RS hat dabei eine Breite LBR1, mit der er auf einen CCD-Chip CCD als Erfassungseinrichtung trifft. Falls der Laserstrahl LS jedoch auf eine Kante trifft, wie aus der Fig. 14 zu ersehen ist, wird nurmehr ein Teil der Breite LBR2 des Laserstrahls LS als reflektierter Strahl RS zum CCD-Chip CCD reflektiert. Beispielsweise ist die Breite LBR2 des an einer Kante K reflektierten Laserstrahls RS in Bezug auf die Situation bei einer Reflexion ohne Kante LBR2 = ½ LBR1, wie die Darstellung der entsprechenden Signale jeweils in der unteren Hälfte der Fig. 13 und 14 veranschaulicht. Ebenso ändert sich die Form des auszuwertenden Signals, wie auch die Darstellung der entsprechenden Signale jeweils in der unteren Hälfte der Fig. 13 und 14 veranschaulicht: Wird bei der Fläche (vgl. Fig. 13) eine symmetrische Gaußkurve beschrieben, so verläuft das Signal im Bereich einer Kante assymmetrisch (vgl. Fig. 14), wie in der Fig. 15 zu sehen ist, in der schematisch die Signalform eines Signals 1, das von der Abtastung einer Fläche herrührt (analog Fig. 13), eines Signals 2, das bei Erreichen eines Randes eines Loches in einer Fläche erhalten wird, und eines Signals 3 skizziert ist, das direkt an einem Rand eines Loches oder hier speziell einer Zahnkavität ZK in einer Fläche erhalten wird (analog Fig. 14). Die Informationen aus Breitenänderung und Form des Signals können zur optimalen Bestimmung des tatsächlichen Randes der Kante K verarbeitet werden. Durch mehrmalige Vermessung dieser Kante K aus mehreren Raumwinkeln mit der beschriebenen Methode können diese Informationen mittels Matchingverfahren gegeneinander geprüft und per Mittelwertbildung im Kantenbereich auf Ihre endgültige Form festgelegt werden.

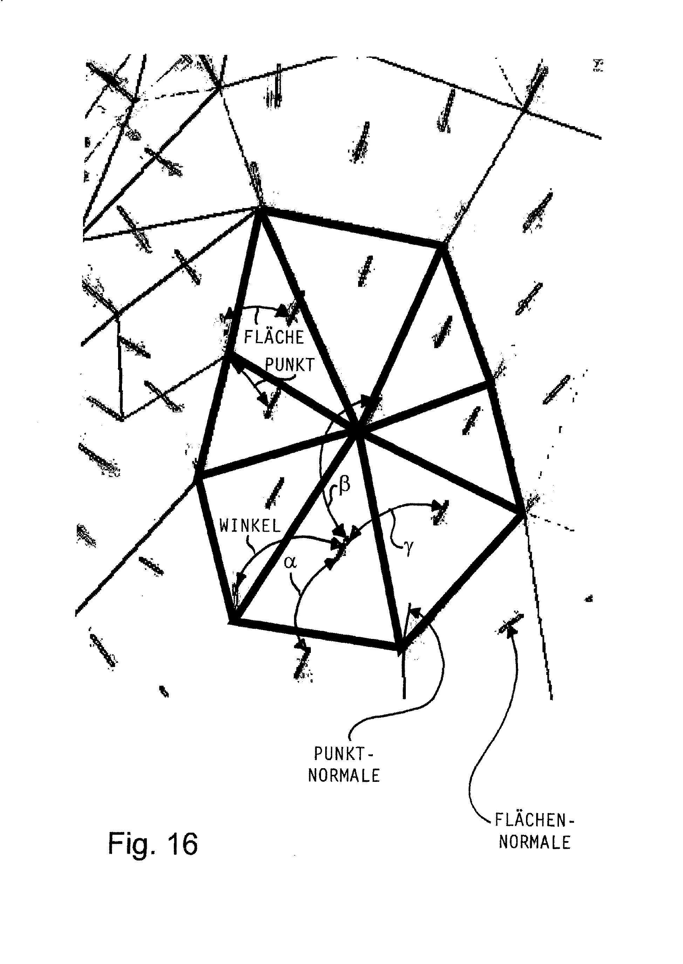

Ein auf diese Weise gescannter 3D-Datensatz beispielsweise einer Zahninlaykavität, welcher 3D-Datensatz beispielsweise durch geeignete Flächentriangulationsmethoden weitervearbeitet wurde, enthält typischerweise Flächen, welche durch mindestens drei oder mehrere Eckpunkte beschrieben sind. Diese Flächen hängen durch gemeinsame Kanten oder Punkte zusammen, wie die Grafik der Fig. 16 veranschaulicht ist. Das beschriebene Verfahren zur teil- bzw. vollautomatischen Randerkennung und Abtrennung erfolgt nun durch die A-Priori-Information, dass Ränder von Präparationen überdurchschnittliche, starke Krümmungen bzw. Winkel aufweisen.

Wird nun an allen Punkten der Flächendatensätze die durchschnittliche Punktnormale aus allen angrenzenden Flächendatensätze errechnet, so kann im Anschluss später durch eine Differenzanalyse der Punktnormale von den Normalen der Flächendatensätze eine Wertigkeit der Krümmung festgelegt werden. Der folgende Schritt versucht, durch Finden von Nachbarschaftbeziehungen die Wertigkeit hinsichtlich verschiedener Kriterien zu steigern und zu klassifizieren. Ein Kriterium können beispielsweise die Nachbarschaftsbeziehungen hinsichtlich einer zusammenhängende Linie bilden. Damit ist der Grundbaustein für die automatische Kantenerkennung gelegt.

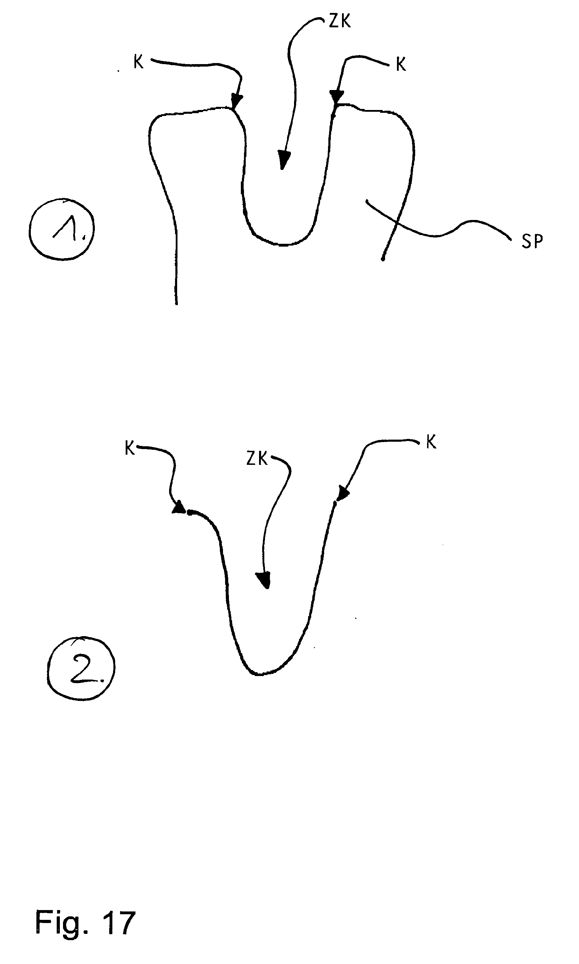

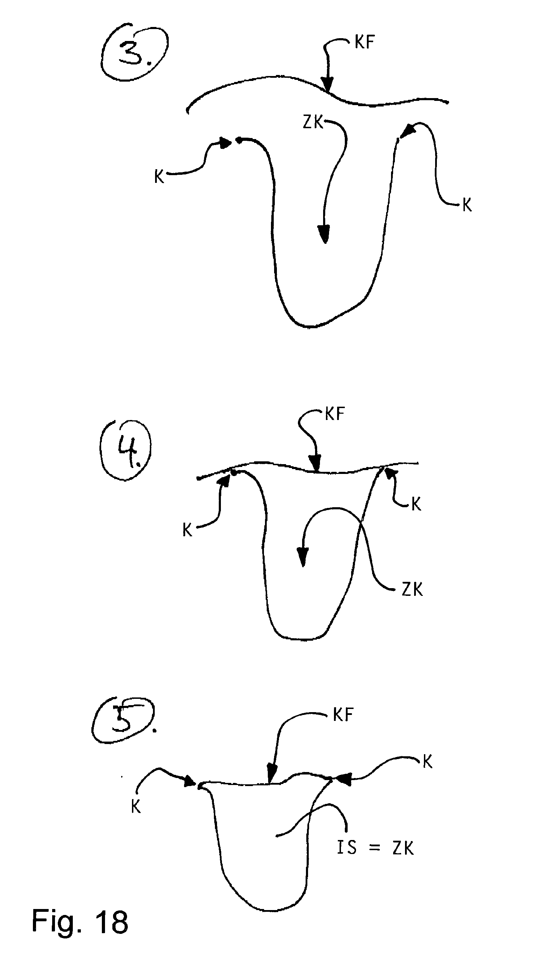

Per Software werden die Kanten nun optimal analysiert, erkannt und zu einem zusammenhängenden Kantenverlauf zusammengeführt, wie in den Verfahrensschrittdarstellungen der Fig. 17 und 18 schematisch dargestellt ist. Zur späteren Herstellung des Zahninlays werden nur die innerhalb eines Kantenverlaufs befindlichen Flächensegmente verwendet.

In der Fig. 17 ist schematisch unter (1.) zur Vereinfachung nur in einer Seitenansicht ein kompletter Datensatz einer Stumpfpräparation SP mit einer für ein Inlay vorbereiteten Zahnkavität ZK und deren Rändern oder Kanten K gezeigt, wobei es sich jedoch in Wirklichkeit jedoch insgesamt um einen 3D-Datensatz handelt, also eine dreidimensionale datenmäßige Repräsentation der Stumpfpräparation.

Unter (2.) ist in der Fig. 17 der Schritt des Erkennens und Abtrennens der Ränder oder Kanten K lediglich schematisch veranschaulicht, wobei wiederum die zweidimensionale Darstellung für den 3D-Datensatz aus dem Schritt (1.) der Fig. 17 repräsentativ ist. Die Kantenerfassung erfolgt dabei beispielsweise so, wie in Bezug auf die Fig. 13 bis 16 erläutert und in diesen Figuren gezeigt ist.

In der Fig. 18 ist der Schritt (3.) weiterhin zur Vereinfachung als zweidimensionale Repräsentation des vollständigen 3D-Datensatzes schematisch veranschaulicht, wobei beispielsweise durch Importieren einer Datenbank-Kaufläche KF die fehlende Seite des herzustellenden und späteren Inlays zu den Daten der vorbereiteten Zahnkavität ZK hinzugefügt wird, die die Formen und Abmessungen des Inlays im übrigen bestimmt. In diesem Schritt werden beispielsweise die in einer Datenbank hinterlegten Kauflächendaten (z.B. für den 4. Backenzahn Unterkiefer) in den Gesamtdatensatz importiert, oder die vor der Behandlung durch den Zahnarzt vermessenen ursprünglichen Zahnformdaten importiert, oder die vermessenen Formdaten einer von einem Zahntechniker individuell für das Inlay in Wachs modellierten Kaufläche importiert.

Im Schritt (4.) der Fig. 18 werden die Daten der importierten Kauffläche KF mit den Daten der vorbereiteten Zahnkavität ZK verknüpft, was wiederum am zweidimensionalen schematischen Beispiel stellvertretend für die jeweiligen 3D-Datensätze von Kauffläche KF und Zahnkavität ZK dargestellt ist. Mittels beispielsweise einer automatischen Anpassungsfunktion beispielsweise mittels Matching-Algorithmus werden die Kauflächendaten optimal an den Rand angepasst und auf den Rand gelegt.

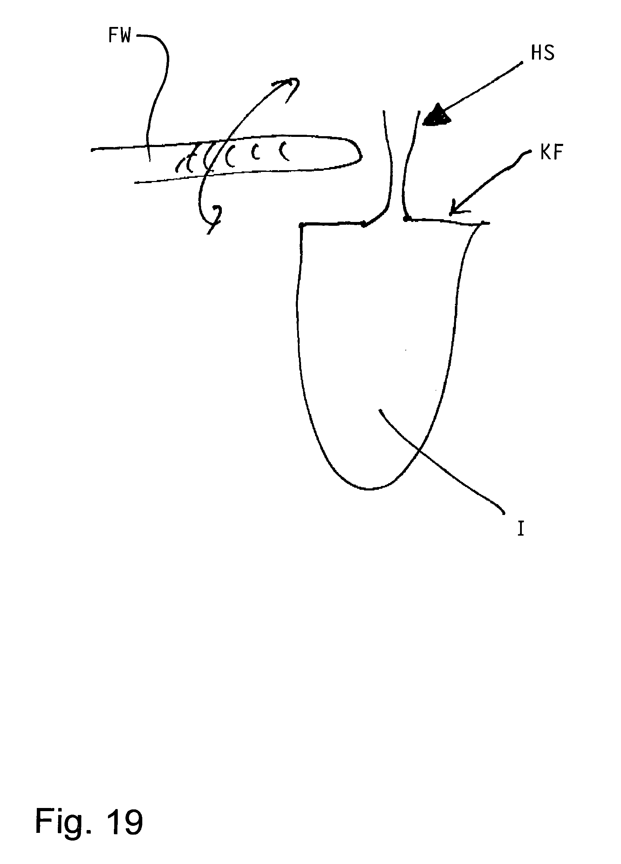

Schließlich erfolgt im Schritt (5.) der Fig. 18 ein Morphen der Kaufläche und ein Abtrennen des Überstandes, so dass ein fertiger Inlaydatensatz IS erhalten wird, der lediglich zur Vereinfachung weiterhin nur als zweidimensionaler Repräsentant für den tatsächlichen Datensatz mit den vollständigen 3D-Daten dargestellt ist. Die Kaufläche z.B. kann mittels Morphing an den Gegenbiss angepasst werden. Der entstandene 3D-Datensatz kann zur CNC-Fertigung von Inlayteilen verwendet werden. Dabei ist es für die Präzision des Inlays I besonders vorteilhaft, wenn der nach Abschluss des Fräsvorgangs mit einem Fräswerkzeug FW verbleibende Haltesteg HS des Inlays I im Bereich der Kaufläche KF positioniert ist, wie anhand der Fig. 19 veranschaulicht ist.

Erfindungsgemäß wird bei einem zweiten Aspekt insbesondere geschaffen ein Verfahren zur Herstellung von komplexen Zahnersatzkonstruktionen. Eine entsprechende Vorrichtung ergibt sich für den Fachmann aus den nachfolgenden Darstellungen und den darin angegebenen Figuren der Zeichnung ohne weiteres.

In der herkömmlichen Zahntechnik werden häufig vorkonfektionierte Teile verwendet. Dabei werden beispielsweise Implantatpfosten, Abutments und Geschiebeteile mechanisch mit dem herkömmlichen Zahnersatz verbunden.

Die Erfindung erlaubt es, den Vorgang des Zusammenfügens mehrerer vorkonfektionierter Teile, beispielsweise mit Klebstoff, zu ersparen. Neben Kostengründen ergibt sich dadurch auch eine verbesserte Gesundheitsverträglichkeit für den Patienten, da nur ein Werkstoff in den Körper eingefügt wird. Ferner ist eine größere Lebensdauer sowie höhere Gesamtpräzision möglich.

Ein vorzugsweiser Bestandteil des vorliegend behandelten Aspektes der Erfindung besteht darin, dass 3D-CAD-Konstruktionsdaten eines vorkonfektionierten Zahnersatzteiles oder von Konstruktionselementen oder Verbindungselementen von Zahnersatzteilen und 3D-Messdaten von Zahnstümpfen und/oder Zahnformen (Supraflächen) zusammengeführt werden.

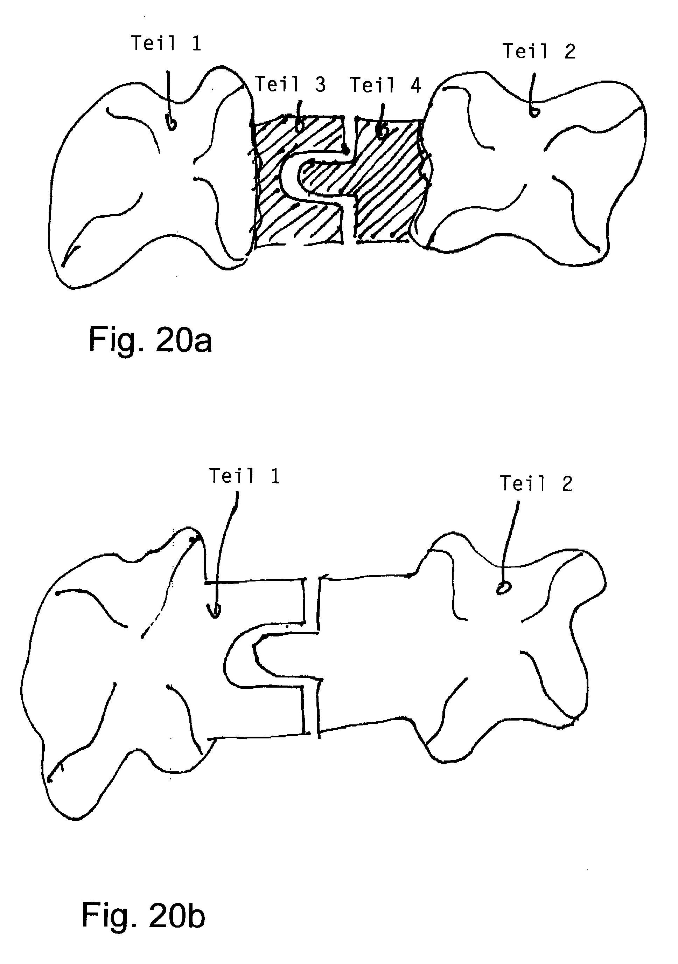

Die Fig. 20a zeigt beispielhaft eine herkömmliche Endproduktsituation, und die Fig. 20b zeigt eine Endproduktsituation nach der vorliegenden Erfindung.

Die Verfahrensschritte:
1. Eine Präparation eines Zahnstumpfes oder mehrerer Zahnstümpfe oder eines Zahnes oder mehrerer Zähne wird vermessen und datentechnisch beispielsweise zu einem triangulierten Flächenmodell weiterverarbeitet.
2. Aus einer 3D-Fertigteilebibliothek wird ein Konstruktionsdatensatz, z.B. eines Geschiebeteiles, Implantatpfostens oder Abutments in den Datensatz importiert.
3. Die Messdaten des Zahnstumpfes oder Zahnes und die Teiledaten der vorkonfektionierten Teile werden in der Software unter Berücksichtigung der Gebisssituation zusammengefügt. Dies geschieht unter Berücksichtigung der Gegebenheiten der Gebisssituation des Patienten, insbesondere der sogenannten "Einschubrichtung". Wenn beispielsweise mehrere Zahnstümpfe zusammen mit einer Zahnbrücke versorgt werden sollen, so muss die Brücke gleichzeitig auf alle Stümpfe aufgeschoben werden können.
4. Dabei kann die Software so ausgeprägt sein, dass die Konstruktionsdaten (z.B. Höhe und Breite) veränderbar bleiben.
5. Nachdem die Mess- und Konstruktionsdaten zusammengeführt wurden und Schnittmengen aus den Datensätzen gelöscht wurden, können die Daten zur Fertigung in einer CNC-Fräsmaschine verwendet werden. Nachdem die Teile gemäss dem beschriebenen Verfahren hergestellt wurden, liegt das Endprodukt gemäss Fig. 20b vor.

Das Verfahren kann unter Berücksichtigung der Zahnsituation des Patienten Anwendung finden. Neben Messdaten des Kieferkamms können auch Messdaten von Nachbarzähnen eingeblendet werden.

Ein besonderer Vorteil dieses Verfahrens liegt darin, dass die Einschubrichtung bei der Konstruktion von Geschiebeteilen berücksichtigt werden kann. Die Mischung von Konstruktionsdaten, CAD-Konstruktionstools, 3D-Matchingtools und Messdatenverarbeitung führt zu einer Vielzahl von technischen Möglichkeiten und Prozessabläufen.

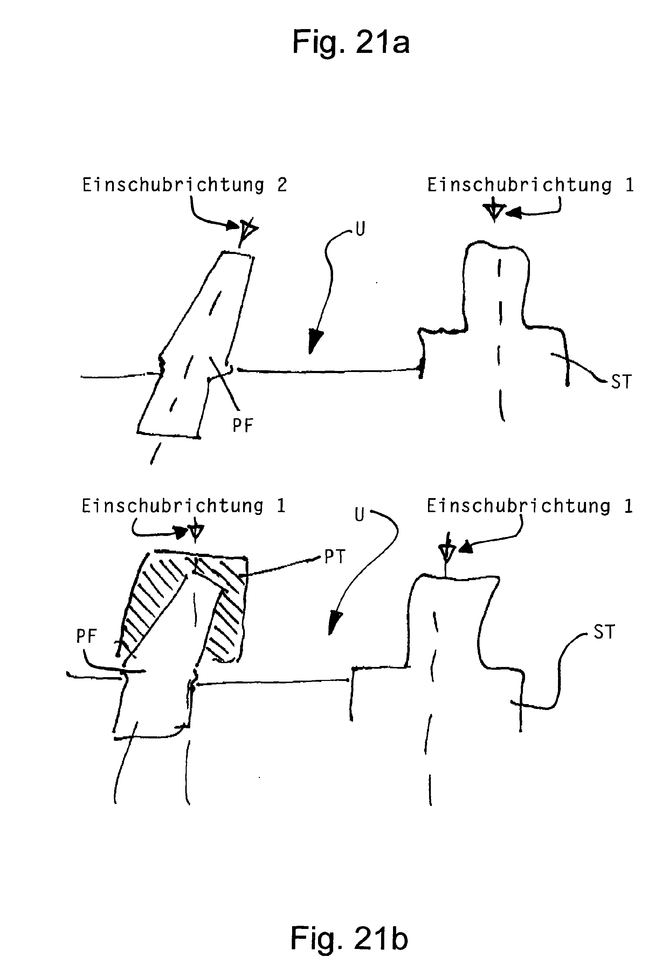

### Ein weiteres Beispiel der Erfindung ist in den Fig. 21a und 21 b sowie 22 erläutert:

Die Fig. 2 1 a und 21b zeigen einen Implantatpfeiler PF (mit Abutment) sowie einen Stumpf ST, die gemeinsam mittels einer Brücke überkront werden sollen. Lediglich der Vollständigkeit halber wird hier noch darauf hingewiesen, dass statt des Implantatpfeilers PF auch ein weiterer Stumpf die Grundlage für das weitere Vorgehen bilden kann, oder es können mehrere Teile als zwei vorhanden sein, die beliebig z.B. Implantatpfeiler oder Zahnstümpfe sein können. Die Situation wird beispielsweise mittels Technologie gemäß dem Stand der Technik, insbesondere der WO 02/39056 A1 vermessen, um 3D-Datensätze des Implantatpfeilers PF in seiner Lage und des Zahnstumpfes in Lage und Form zu erhalten. Erfoderlichenfalls kann auch der Implatatpfeiler in seiner Form erfaßt werden, wenn es sich dabei nicht um ein Konfektionsteil handelt, dessen 3D-Daten bereits im System vorhanden sind, so dass nur mehr seine Lage bestimmt werden braucht.

Wie aus den Fig. 21 a und 21b sowie 22 zu ersehen ist, liegen jedoch 2 unterschiedliche Einschubrichtungen vor. (Einschubrichtung 1 durch den Stumpf ST und Einschubrichtung 2 durch den Implantatpfeiler PF). Um eine gemeinsame Brücke auf den Implantatpfeiler PF und den Stumpf ST oder beispielsweise auch zwei Stümpfe setzen zu können, muss jedoch eine gemeinsame Einschubrichtung geschaffen werden. In den Fig. 21 a, 21b und 22 wird zu diesem Zweck die Einschubrichtung 1 gewählt, was beispielsweise vollautomatisch mittels der eingesetzten Software realisiert werden kann, jedoch auch halbautomatisch durch Wähl- und Einstellbarkeit innerhalb von der Software vorgegebener Grenzen durch einen Bediener gewählt und für das weitere Verfahren vorgegeben werden kann. Grundsätzlich auch möglich ist eine rein manuelle Wahl der Einschubrichtung, was insbesondere für komplizierte Anordnungen eine starke Einbeziehung von fachmännischem Know-how ermöglicht. So kann vorzugsweise vollautomatisch ein Vorschlag seitens der Software erfolgen, worauf in einem nachfolgenden Schritt eine halbautomatische Anpassung durch einen Anwender innerhalb von der Software vorgegebener Grenzen erfolgen kann, und schließlich, wenn auch damit noch keine befriedigende und/oder realisierbare Lösung erzielt werden kann, letztlich eine rein manuelle Festlegung erfolgen kann.

Mittels der Kenntnis der Einschubrichtungen kann eine Software ein Primärteil PT gemäß Fig. 21b berechnen, das zur Vereinheitlichung der beiden Einschubrichtungen als Adapter auf dem Implantatpfeiler PF wirkt, so dass für letzteren auch die Einschubrichtung 2 gilt. Dabei können Ränder für das Primärteil PT oder den Adapter entweder vollautomatisch von der Software oder halbautomatisch, indem bestimmte Ränder innerhalb von Grenzen vorgegeben und einstellbar sind, oder manuell eingestellt werden, indem von einem Anwender die Ränder frei angegeben werden. Insbesondere kann die Software auch gleich eine Fräsrichtung speziell in Abhängigkeit von der Einschubrichtung, insgesamt jedoch unter Berücksichtigung verschiedenster Parameter, für das Zahnersatzteil festgelegt werden.

Somit wird Innendatensatz zunächst die Messung des Stumpfes ST einschließlich seiner Umgebung U verwendet, in der der Implantatpfeiler PF liegt. Anschließend wird z.B. der Konstruktionsdatensatz des Implantatpfostens PF (mit Abutment) geladen und mittels Matchingverfahren den Messdaten räumlich zugeordnet. Dies dient dazu, dass die Daten des Konstruktionsdatensatzes für die CNC-Fertigung des Teiles verwendet werden sollen, da dadurch eine höhere Präzision des Endprodukts erlangt werden kann, als bei der Verarbeitung von Messdaten. Die Außenkontur des Primärteils kann ebenso künstlich erzeugt bzw. CADkonstruiert werden, wobei eine oder die durch den Stumpf ST festgelegte Einschubrichtung 1 zu Grunde gelegt wird. Somit kann ein individuelles, mechanisch präzises Primarteil gefertigt werden.

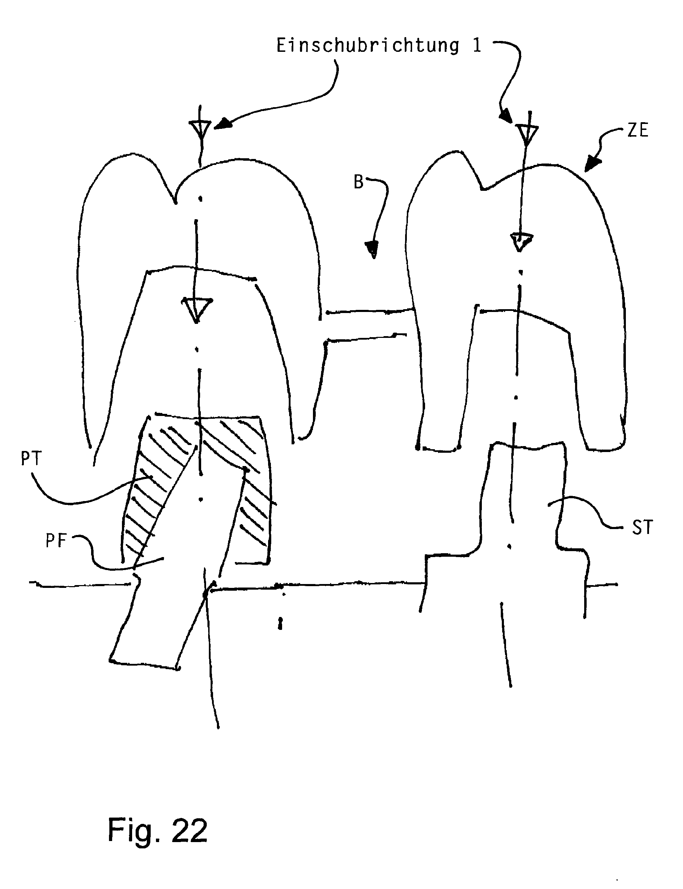

Im nächsten Arbeitsschritt werden Primärteile und Zahnstumpf zusammen vermessen und die Innendaten für die darauf anzuordnenden Zahnersatzteile ZE, wie beispielsweise eine Brücke B gemäß der Fig. 22 präzise ermittelt. Neben einer Fertigteiledatenbank können auch Kauflächendatenbänke zum Import verwendet werden und mit den Messdaten gematcht und verschmolzen werden. Eine Anpassung zum Gegenbiss erfolgt beispielsweise mittels Morphing. Somit kann eine individuelle, hochpräzise, und komplexe Gebisssituation mittels CAD/CAM-Verfahren bearbeitet werden. Damit können schließlich die Sekundär-/Tertiärkonstruktionen per Software erzeugt und gefräst werden.

Wesentlich für den letzten Aspekt der vorliegenden Erfindung ist die Verwendung eines Primärteils als Adapter um für ein Zahnersatzteil, das mehrere Zahnstümpfe, Implantatpfosten usw. betrifft, eine gemeinsame Einschubrichtung vorsehen zu können. Damit ist die Verwendung von umfassenderen Zahnersatzteilen möglich, die ohne den vorliegenden Aspekt der Erfindung nicht eingesetzt werden könnten, da sie wegen der bisher erforderlichen Mehrzahl an verschiedenen Einschubrichtungen bis jetzt nicht auf die Unterstruktur im Mund aufgesetzt werden könnten.

Insbesondere beziehen sich die vorstehenden Ausführungsbeispiele auf die in den Ansprüchen angegebenen Ausgestaltungen und stellen die konkreten Vorrichtungs- und Verfahrensmerkmale Ausführungsbeispiele der beanspruchten Ausgestaltungen dar, so dass die Relation der Terminologien in den Ausführungsbeispielen und in den Ansprüchen ohne weiteres verständlich ist und ferner klar ist, dass die Ausführungsbeispiele und deren Merkmale und Merkmalskombinationen exemplarisch für die Angaben in den Ansprüchen stehen und letztere nicht beschränken sondern lediglich verdeutlichen.

Die Erfindung ist anhand der Ausführungsbeispiele in der Beschreibung und in den Zeichnungen lediglich exemplarisch dargestellt und nicht darauf beschränkt, sondern umfaßt alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik insbesondere unter Einbeziehung der vollständigen Offenbarungsgehalte der in dieser Beschreibung angegebenen älteren Anmeldungen kombinieren kann. Insbesondere sind alle einzelnen Merkmale und Ausgestaltungsmöglichkeiten der Erfindung und ihrer Ausführungsbeispiele kombinierbar.

## Patentansprüche

1. Oberflächenerfassungs- und/oder Erzeugungseinrichtungen, **gekennzeichnet durch** Einrichtungen zur Herstellung von komplexen Zahnersatzkonstruktionen.

2. Oberflächenerfassungs- und/oder Erzeugungseinrichtungen nach Anspruch 1,
ferner mit Einrichtungen zur Erfassung von 3D-Daten wenigstens eines Zahnersatzbasisobjektes, wie eines Zahnstumpfes oder Implantatpfostens, und einer Umgebung davon, sowie
mit Einrichtungen zur datenmäßigen Erzeugung und Herstellung eines Zahnersatzteils unter Einbeziehung der 3D-Daten des Zahnersatzbasisobjektes,
**dadurch gekennzeichnet,**
**dass** ferner vorgesehen sind:
Einrichtungen zur Ermittlung und/oder Festlegung einer Einschubrichtung des Zahnersatzteils, das auf das Zahnersatzbasisobjekt aufzuschieben ist, sowie
Einrichtungen zur Ermittlung und Herstellung eines Primärteils, das vor dem Zahnersatzteil auf das Zahnersatzbasisobjekt aufzuschieben ist und das für das Zahnersatzteil eine gewünschte Einschubrichtung ergibt, die von der Einschubrichtung verschieden ist, die für das Aufschieben des Primärteils auf das Zahnersatzbasisobjekt gegeben ist, und
**dass** die Einrichtungen zur datenmäßigen Erzeugung und Herstellung eines Zahnersatzteils ausgelegt sind, letzteres unter Einbeziehung der 3D-Daten des Primärteils zu erzeugen und herzustellen.

3. Oberflächenerfassungs- und/oder Erzeugungseinrichtungen nach Anspruch 2,
**dadurch gekennzeichnet,**
**dass** ferner Kombinationseinrichtungen vorgesehen sind, die zum Zusammenführen von 3D-Daten von wenigstens 2 Zahnersatzbasisobjekten in Form, Lage und Stellung zueinander ausgelegt sind, und
**dass** die Einrichtungen zur Herstellung eines Zahnersatzteils ausgelegt sind, ein gemeinsames Zahnersatzteil für alle beteiligten Zahnersatzbasisobjekte herzustellen.

4. Oberflächenerfassungs- und/oder Erzeugungseinrichtungen nach Anspruch 2 oder 3,
**dadurch gekennzeichnet,**
**dass** zur Erfassung von Form, Lage und/oder Stellung jedes Zahnersatzbasisobjektes und/oder jedes Primärteils berührungslos arbeitende Erfassungseinrichtungen enthalten sind.

5. Oberflächenerfassungs- und/oder Erzeugungseinrichtungen nach einem der Ansprüche 2 bis 4, **dadurch gekennzeichnet,**
**dass** für die Ermittlung und/oder Festlegung und/oder Erzeugung und/oder Zusammenführung von Messdaten, 3D-Daten und -Datensätzen, Archiv- und/oder Vorgabedaten und/oder -datensätzen sowie Einschubrichtungen elektronische Verarbeitungseinrichtungen vorgesehen sind, denen Prozessoreinrichtungen, Speichereinrichtungen, Schnittstellen und Steuereinrichtungen zugeordnet sind oder in denen Prozessoreinrichtungen, Speichereinrichtungen, Schnittstellen und Steuereinrichtungen enthalten sind.

6. Oberflächenerfassungs- und/oder Erzeugungseinrichtungen nach einem der Ansprüche 2 bis 5, **dadurch gekennzeichnet,**
**dass** Einrichtungen gemäß der WO 02/39056 A1 enthalten sind.

7. Oberflächenerfassungs- und/oder Erzeugungseinrichtungen nach einem der Ansprüche 2 bis 6,
**dadurch gekennzeichnet,**
**dass** CAD/CAM-Einrichtungen enthalten sind.

8. Oberflächenerfassungs- und/oder Erzeugungseinrichtungen nach einem der Ansprüche 2 bis 7,
**dadurch gekennzeichnet,**
**dass** Datenfernübertragungseinrichtungen enthalten sind, so dass die Erfassungseinrichtungen und jedenfalls die Erzeugungseinrichtungen und/oder die Herstellungseinrichtungen lokal getrennt voneinander aufstellbar sind.

9. Oberflächenerfassungs- und/oder Erzeugungseinrichtungen nach Anspruch 8,
**dadurch gekennzeichnet,**
**dass** eine Mehrzahl von lokal getrennt voneinander aufgestellte Erfassungseinrichtungen mit einer zentralen Erzeugungseinrichtung gekoppelt ist.

10. Oberflächenerfassungs- und/oder Erzeugungseinrichtungen nach einem der vorhergehenden Ansprüche, **gekennzeichnet durch** Einrichtungen zur teil- oder vollautomatischen Randerkennung von Inlaypräparationen.

11. Oberflächenerfassungs- und/oder Erzeugungsverfahren, **gekennzeichnet durch** Verfahrensschritte zur Herstellung von komplexen Zahnersatzkonstruktionen.

12. Oberflächenerfassungs- und/oder Erzeugungsverfahren nach Anspruch 11, wobei ferner von einem Zahnersatzbasisobjekt, wie einem Zahnstumpf oder Implantatpfosten, und einer Umgebung davon 3D-Daten erfasst werden und dann auf der Basis dieser 3D-Daten des Zahnersatzbasisobjektes ein darauf aufzuschiebendes Zahnersatzteil hergestellt wird,
**dadurch gekennzeichnet,**
**dass** vor der Herstellung des Zahnersatzteils
eine Einschubrichtung des Zahnersatzteils auf das Zahnersatzbasisobjekt ermittelt und/oder festgelegt wird,
auf der Basis dieser 3D-Daten des Zahnersatzbasisobjektes ein Primärteil ermittelt und hergestellt wird, mit dem für das Zahnersatzteil eine gewünschte Einschubrichtung geschaffen wird, die von der Einschubrichtung verschieden ist, die für das Aufschieben des Primärteils auf das Zahnersatzbasisobjekt gegeben ist, und
das Zahnersatzteil passend zum Aufschieben auf das Primärteil auf der Basis dessen 3D-Daten datenmäßig erzeugt und hergestellt wird.

13. Oberflächenerfassungs- und/oder Erzeugungsverfahren nach Anspruch 12,
**dadurch gekennzeichnet,**
**dass** 3D-Daten von wenigstens 2 Zahnersatzbasisobjekten in Form, Lage und Stellung zueinander erfaßt werden, und
**dass** ein gemeinsames Zahnersatzteil für alle beteiligten Zahnersatzbasisobjekte datenmäßig erzeugt und hergestellt wird.

14. Oberflächenerfassungs- und/oder Erzeugungsverfahren nach Anspruch 13,
**dadurch gekennzeichnet,**
**dass** 3D-Daten von wenigstens 2 Zahnersatzbasisobjekten in Form, Lage und Stellung zueinander einzeln erfaßt und dann zusammengeführt werden.

15. Oberflächenerfassungs- und/oder Erzeugungsverfahren nach einem der Ansprüche 12 bis 14,
**dadurch gekennzeichnet,**
**dass** die Erfassung von Form, Lage und/oder Stellung jedes Zahnersatzbasisobjektes und/oder jedes Primärteils berührungslos erfolgt.

16. Oberflächenerfassungs- und/oder Erzeugungsverfahren nach einem der Ansprüche 12 bis 15,
**dadurch gekennzeichnet,**
**dass** Einrichtungen gemäß der WO 02/39056 A1 eingesetzt werden.

17. Oberflächenerfassungs- und/oder Erzeugungsverfahren nach einem der Ansprüche 11 bis 16,
**dadurch gekennzeichnet,**
**dass** Messdaten, 3D-Daten und -Datensätze, Archiv- und/oder Vorgabedaten und/oder -datensätze sowie Einschubrichtungen insbesondere aus Messeinrichtungen und/oder Speichereinrichtungen verwendet werden.

18. Oberflächenerfassungs- und/oder Erzeugungsverfahren nach Anspruch 17,
**dadurch gekennzeichnet,**
**dass** Daten von vorkonfektionierten Teilen aus Datenbanken verwendet werden.

19. Oberflächenerfassungs- und/oder Erzeugungsverfahren nach einem der Ansprüche 12 bis 18,
**dadurch gekennzeichnet,**
**dass** CAD/CAM-Verfahren enthalten sind.

20. Oberflächenerfassungs- und/oder Erzeugungsverfahren nach einem der Ansprüche 12 bis 19,
**dadurch gekennzeichnet,**
**dass** die Erfassung von Objekten und insbesondere deren 3D-Daten und -Datensätzen unter Zwischenschaltung von Datenfernübertragung örtlich getrennt von der Herstellung von Primärteilen und/oder Zahnersatzteilen erfolgt.

21. Oberflächenerfassungs- und/oder Erzeugungsverfahren nach Anspruch 20,
**dadurch gekennzeichnet,**
**dass** eine Erfassung an einer Mehrzahl von Orten durch Datenfernübertragung zu zentraler Erfassung und/oder Herstellung gekoppelt ist.

22. Oberflächenerfassungs- und/oder Erzeugungsverfahren, nach einem der Ansprüche 11 bis 21, **gekennzeichnet durch** Verfahrensschritte zur teil- oder vollautomatischen Randerkennung von Inlaypräparationen.
